(19) Europäisches Patentamt
European Patent Office
Office européen des brevets

(11) **EP 2 618 119 B1**

(12) **EUROPÄISCHE PATENTSCHRIFT**

(45) Veröffentlichungstag und Bekanntmachung des Hinweises auf die Patenterteilung:
**13.11.2019 Patentblatt 2019/46**

(51) Int Cl.:
*G01J 3/46* ^(2006.01)      *B41F 33/00* ^(2006.01)

(21) Anmeldenummer: **12455008.8**

(22) Anmeldetag: **22.11.2012**

(54) **Farbtreueprüfung**

Colour fidelity testing

Vérification de la fidélité des couleurs

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2012 AT 662012**

(43) Veröffentlichungstag der Anmeldung:
**24.07.2013 Patentblatt 2013/30**

(73) Patentinhaber: **AIT Austrian Institute of Technology GmbH**
**1220 Wien (AT)**

(72) Erfinder:
• **Huber-Mörk, Reinhold**
**1220 Wien (AT)**
• **Stolc, Svorad**
**831 01 Bratislava (SK)**
• **Mayer, Konrad**
**1230 Wien (AT)**

(74) Vertreter: **Wildhack & Jellinek**
**Patentanwälte**
**Landstraßer Hauptstraße 50**
**1030 Wien (AT)**

(56) Entgegenhaltungen:
**EP-A1- 0 321 402      EP-A1- 0 324 718**
**DE-A1- 19 830 487**

EP 2 618 119 B1

**Beschreibung**

Die Erfindung betrifft ein Verfahren und eine Vorrichtung zur Bestimmung der Farbtreue und/oder zur Ermittlung des für den Menschen wahrnehmbaren Farbunterschieds zwischen zwei jeweils durch Farbvektoren vorgegebenen Farben.

Insbesondere betrifft die Erfindung ein Verfahren zur Quantifizierung des für einen Menschen wahrnehmbaren Unterschieds zwischen einem Farbwert und einem Sollwert, das im Zuge einer schnellen optischen Farbtreueprüfung von Gegenständen mittels eines Bildsensors durchgeführt wird.

Die EP 0324718 A1 offenbart ein Verfahren und eine Vorrichtung zur Farbregelung einer Druckmaschine bei denen der Farbort eines Bezugsfelds in einem Farbabstandsrechner mit dem Farbort eines zugeordneten Soll-Bezugsfelds verglichen wird. Aus dem Farbabstand wird ein Schichtdickenänderungssteuervektor berechnet. Die DE 19830487 A1 zeigt ein Verfahren zur Ermittlung von Flächendeckungen in einem Druckbild bei dem Bildelemente mit Licht verschiedener Wellenlänge abgetastet werden. Die Flächendeckung der Druckfarben wird dabei aus den Abtastsignalen berechnet. Die EP 0321402 A1 offenbart ein Verfahren zur Farbsteuerung oder Farbregelung einer Druckmaschine, bei dem die Ist-Farbkoordinaten von Messfeldern mit einem jeweils angestrebten Soll-Farbort verglichen werden.

Unter einem Sensor wird im Zusammenhang mit der vorliegenden Erfindung jeweils ein Sensor verstanden, der Helligkeitswerte für unterschiedliche Wellenlängenbereiche liefert. So können etwa drei Teilsensoren mit jeweils unterschiedlicher Wellenlängensensitivität gemeinsam einen Sensor bilden. Mehrere Sensoren können gemeinsam in einem Array angeordnet sein und so einen Bildsensor für eine Kamera bilden. Jedem Sensor kann allenfalls auch noch eine konkrete Auswerteschaltung nachgeschaltet sein, die vorab Farb- und Helligkeitskorrekturen vornimmt.

Weiters betrifft die Erfindung eine Vorrichtung zur Bestimmung der Farbtreue und/oder zur Ermittlung des für den Menschen wahrnehmbaren Farbunterschieds zwischen zwei jeweils durch Farbvektoren vorgegebenen Farben.

Die Überprüfung von Objekten, insbesondere Druckwerken, erfordert oft eine Überprüfung der Objektfarbe hinsichtlich ihrer Abweichung von einem vorgegebenen Sollwert. Hierbei ist es insbesondere erforderlich, die für das menschliche Auge wahrnehmbaren Unterschiede zwischen der Objektfarbe und dem vorgegebenen Sollwert möglichst gering zu halten. Zur Bestimmung des für den Menschen wahrnehmbaren Farbunterschieds können mittels eines kalibrierten Bildaufnahmesystems mit Bildsensoren ermittelte Farbwerte, die in der Regel als Helligkeitsmesswerte bei unterschiedlichen Farbbereichen ermittelt wurden, in einen CIELAB-Farbraum übergeführt werden, der von der konkreten Auswahl der Bildsensoren, deren spektralen Empfindlichkeit, sowie der Sensibilität der Bildsensoren unabhängig ist. Insbesondere können die mit dem jeweiligen Mehrfarbenbildsensor aufgezeichneten Messwerte, das sind in der Regel Tripel von Rot-Grün-Blau-Messwerten, in Tripel des bildsensorunabhängigen CIELAB-Farbraums transformiert werden. Im CIELAB-Farbraum können für das menschliche Auge wahrnehmbare Farbunterschiede besonders einfach quantifiziert werden.

Aus dem Stand der Technik ist eine Vielzahl von unterschiedlichen Farbsystemen bzw. Referenzfarbsystemen bekannt, die eine Anzahl von Grundfarben zur Verfügung stellen. Beispiele für solche Referenzsysteme sind z.B. das PANTONE-Matching-System (PMS) und das natural colours system (NCS). Diese Farbreferenzsysteme können sowohl ineinander als auch zum international anerkannten colorimetrischen Farbsystem der CIE umgerechnet werden und in dem von der CIE definierten Farbräumen eindeutig dargestellt werden. Zudem weisen die von der CIE definierten Farbräume im wesentlichen den Vorteil auf, dass Abweichungen zwischen einzelnen in den Farbräumen angegebenen Farben den jeweiligen perzeptuellen Abständen zwischen den Farben, das heißt der unterschiedlichen Wahrnehmung durch einen menschlichen Betrachter, entsprechen. Von der CIE wurden die Farbräume CIELAB und CIELUV festgelegt, wobei für colorimetrische Anwendungen typischerweise der CIELAB-Farbraum verwendet wird. EP 0 324 718 offenbart ein Verfahren zur Regelung einer Druckmaschine bei dem der Farbunterschied unter Verwendung einer Umrechnungsmatrix ausgerechnet wird.

Eine Möglichkeit, die Farbtreue nach CIE zu prüfen, erfordert eine Transformation der von den Bildvektoren ermittelten und im Bildsensor spezifischen farbraumdefinierten Farbwerten, um den perzeptuellen gleichabständigen CIELAB-Farbraum und anschließend die Berechnung der Farbdifferenz $\Delta E76$, wie in "Connolly, C., Fleiss, T.: A study of efficiency and accuracy in the transformation from RGB to CIELAB color space. IEEE Trans. Image Process. 6(7), 1046-1048 (1997)″ beschrieben. Nach dieser Definition kann der Farbabstand $\Delta E76$ als euklidische Distanz zwischen einem Soll-Farbwert und einem Ist-Farbwert ermittelt werden, wobei diese beiden Farbwerte jeweils in den CIELAB-Raum transformiert sind.

Die ursprüngliche Definition des $\Delta E76$ aus dem Jahr 1976 wurde in den Folgejahren mehrmals überarbeitet, resultierend in den Vorschlägen $\Delta E94$, CIEDE2000 und CIE CMC, was neben besserer Korrespondenz zur perzeptuellen Farbdifferenz auch eine komplexere Berechnung des jeweiligen Farbabstandes $\Delta E$ zur Folge hatte. Die in der Erfindung beschriebene Methode ist unabhängig von der jeweiligen Methode zur Berechnungsvorschrift für den Farbabstand anwendbar.

Eine präzise Transformation vom Bildsensor-abhängigen in den Bildsensor-unabhängigen Farbraum erfordert eine Charakterisierung der Farbempfindlichkeit des Bildsensors wie vom International Color Consortium ICC "International Color Consortium (ICC): Spec. ICC.1:2004-10 (profile version 4.2.0.0). image tech. col. mgmt. - arch., profile format, and data struc. (2004)" empfohlen und in einem sogenannten ICC-Profil resultierend. Daneben können auch einfachere Methoden, sogenannte matrixing Methoden "Ilie, A., Welch, G.: Ensuring color consistency across multiple cameras. In: Proc. of IEEE Conf. on Comp. Vis. pp. 2:1268-1275. Beijing, China (2005)", zur Anwendung kommen. Die in der Erfindung beschriebene Methode ist unabhängig von der Charakterisierungsmethode anwendbar.

Um die mit einem Bildsensor aufgenommenen Farben in den CIELAB-Raum zu transformieren, ist nach dem Stand der Technik vorgesehen, eine Anzahl von sogenannten Farbcharts, beispielsweise einer IT8.7/2 Farbtafel, mit dem Sensor aufzunehmen und die jeweiligen Farbwerte zu ermitteln, wobei für jede auf der Farbtafel abgebildete Farbe jeweils Farbwerte durch Messung ermittelt werden und für die einzelnen Farben auf der Farbtafel die zugehörigen Werte im CIELAB-Raum bekannt sind. Alternativ können jedoch auch Werte in einem XYZ-Farbraum vorgegeben werden, die anschließend durch eine vorgegebene feste und nicht nichtlineare Transformationsvorschrift in Farbwerte des CIELAB-Farbraums übergeführt werden. Als Resultat dieser Kalibrierung erhält man eine Farbtransformationsvorschrift, mit der für jeden mit dem Sensor ermittelten Farbwert jeweils ein Farbwert im CIELAB-Raum vorliegt. Ein solcher Farbwert wird im vorliegenden Fall jeweils durch ein Tripel von Werten angegeben. Der Farbwert des Sensors ist im Farbraum des Sensors durch drei Helligkeitswerte bei drei unterschiedlichen Wellenlängenbereichen angegeben. Im CIELAB-Raum wird dieselbe Farbe hingegen durch eine Helligkeitsinformation L, sowie zwei Farbinformationen a, b angegeben.

Bei der automatisierten Prüfung von Objekten ist es nach dem derzeitigen Stand der Technik zwar erforderlich, eine Vielzahl von aufgenommenen Farbwerten zur Überprüfung der Objektfarbe vom RGB-Farbraum in den CIELAB-Raum zu transformieren und anschließend miteinander zu vergleichen. Ein solcher Vergleich muss aber, wenn Kamerabilder bei der Objektprüfung verwendet werden, äußerst häufig durchgeführt werden, das heißt, der Vergleich ist beispielsweise mehrere Millionen Male pro Sekunde durchzuführen, was bei einer relativ komplexen Bestimmungsvorschrift, wie dies bei der Transformation in den CIELAB-Farbraum der Fall ist, zu einer sehr großen Ressourcenbelastung führen kann.

Aufgabe der Erfindung ist es daher, ein einfacheres Verfahren sowie eine Vorrichtung zur Verfügung zu stellen, mit dem oder der die Farbtreue bestimmt werden kann, und/oder mit dem oder der der für den Menschen wahrnehmbare Farbunterschied zwischen zwei durch Farbvektoren vorgegebenen Farben ermittelt werden kann.

Die Erfindung löst diese Aufgabe bei einem Verfahren der eingangs genannten Art mit den Merkmalen des Kennzeichens des unabhängigen Patentanspruches 1.

Weiters löst die Erfindung die Aufgabe bei einer Vorrichtung der eingangs genannten Art mit den kennzeichnenden Merkmalen des Patentanspruches 13.

Erfindungsgemäß ist bei einem Verfahren zur Bestimmung der Farbtreue und/oder zur Ermittlung des für den Menschen wahrnehmbaren Farbunterschieds zwischen zwei jeweils durch Farbvektoren vorgegebenen Farben,

- wobei die beiden Farbvektoren in Bezug auf einen vorgegebenen Farbraum festgelegt werden,

- wobei jede der Komponenten des jeweiligen Farbevektors jeweils dem Helligkeitsmesswert eines Sensors für eine vorgegebene Wellenlänge oder einen vorgegebenen Wellenlängenbereich entspricht, vorgesehen,

- dass der Farbabstand im Farbraum R zwischen den beiden Farbvektoren ermittelt wird,

- ein Basisfarbvektor durch einen der beiden Farbvektoren oder durch Verknüpfung der beiden Farbvektoren im Farbraum festgelegt wird,

- dass ein Multiplikator durch Auswahl aus einer Anzahl vorgegebener Multiplikatoren in Abhängigkeit vom Basisfarbvektor ermittelt wird,

- wobei der ausgewählte Multiplikator das Verhältnis des Abstands von in den CIELAB-Farbraum transformierten Farbvektoren zum Abstand dieser Farbvektoren im vorgegebenen Farbraum innerhalb einer vorgegebenen Umgebung um den Basisfarbvektors näherungsweise angibt, und

- dass der wahrnehmbare Farbunterschied oder die Farbtreue als Produkt des Farbabstands und des Multiplikators gemäß $\Delta E = \Delta R \cdot \Delta \hat{E}$ ermittelt wird.

Wesentlicher Vorteil hierbei ist, dass vor der Durchführung der erfindungsgemäßen Verfahrensschritte eine Kalibrierung mit den zeitaufwendigen Berechnungen stattfindet und während des eigentlichen Verfahrens bloß eine geringe Anzahl von arithmetischen Operationen durchgeführt wird.

Gemäß einer bevorzugten Ausführungsform der Erfindung ist vorgesehen, dass einer der beiden Farbvektoren als Soll-Farbvektor vorgegeben wird und der jeweils andere der beiden Farbvektoren als Ist-Farbvektor der Farben durch Messung ermittelt wird,

- wobei insbesondere der Soll-Farbvektor im CIELAB-Farbraum vorgegeben und in den Farbraum zurücktransformiert wird. Hierdurch können Farbabweichungen von einem Soll-Farbvektor vorteilhaft selektiert werden.

Alternativ kann vorgesehen sein, dass beide Farbvektoren durch Messung ermittelt werden. Hierdurch können Abweichungen einzelner Farbmesswerte voneinander ermittelt werden.

Zur Verringerung und Vereinfachung der Kalibrierung sowie zur Verringerung des zur Durchführung des Verfahrens erforderlichen Speichers, ist es vorgesehen,

- dass der Multiplikator ermittelt wird, indem
- ein Quantisierungsraum umfassend eine Anzahl von Vektoren vorgegeben ist,
- eine Zuordnung für jeden Farbvektor innerhalb des Farbraums zu jeweils einem der Vektoren im Quantisierungsraum vorgegeben ist, wobei alle auf denselben Vektor abgebildeten Farbvektoren des Quantisierungsraums jeweils innerhalb einer vorgegebenen Umgebung liegen, und die Zuordnung benachbart liegende Umgebungen von Farbvektoren auf jeweils benachbart liegende Vektoren im Quantisierungsraum abbildet,
- jedem Vektor innerhalb des Quantisierungsraums jeweils ein Multiplikatorwert zugeordnet ist,
- für den Basisfarbvektor der ihm jeweils durch die Zuordnung zugeordnete Vektor gesucht und ihm als Quantisierungsvektor zugeordnet wird, und
- der dem jeweiligen Quantisierungsvektor zugeordnete Multiplikatorwert ermittelt und als Multiplikator herangezogen wird.

Zur vereinfachten Durchführung des Verfahrens kann vorgesehen sein, dass die einzelnen Multiplikatorwerte in einem Speicher abgespeichert vorliegen, wobei für jeden einzelnen Vektor des Quantisierungsraums jeweils ein Speicherbereich vorgesehen ist und der dem jeweiligen Basisvektor zugeordnete Multiplikator vor seiner Multiplikation mit dem Abstand aus dem Speicher abgerufen wird.

Eine besonders vorteilhafte und einfache Quantisierung kann erreicht werden, indem der dem Basisfarbvektor jeweils zugeordnete Quantisierungsvektors nach der folgenden Vorschrift ermittelt wird,

$$Q(B) = [B_1 \cdot \text{floor}(B_1/S_1) + \text{floor}(S_1/2), B_2 \cdot \text{floor}(B_2/S_2) + \text{floor}(S_2/2),$$

$$\ldots, B_n \cdot \text{floor}(B_n/S_n) + \text{floor}(S_n/2)]$$

wobei $B_1$, $B_2$, ..., $B_n$ die einzelnen Komponenten des Basisfarbvektors bezeichnen, und $S_1$, $S_2$, ..., $S_n$ die Quantisierungsintervalle für die einzelnen Farbkomponenten bezeichnen, die insbesondere im Bereich zwischen 2 bis 20, insbesondere auf 4, 8 oder 16 festgelegt werden.

Zur einfachen Kalibrierung und Ermittlung der Messwerte für den Multiplikator kann vorgesehen sein, dass für jeden Vektor des Quantisierungsraums jeweils ein in der Umgebung der auf den Vektor abgebildeten Farbvektoren als Zentralvektor herangezogen wird, und dass innerhalb der Umgebung oder innerhalb einer weiteren Umgebung um den Zentralvektor eine Anzahl von Nachbarvektoren vorgegeben und dem Zentralvektor oder dem jeweiligen Vektor des Quantisierungsraums zugewiesen wird,

- dass für den Zentralvektor und jedem seiner ihm zugeordneten Nachbarvektoren

- der Zentralvektor sowie der jeweilige Nachbarvektor nach einer vorgegebenen Vorschrift in den CIELAB-Farbraum transformiert werden,
- nach vorgegebenen Kriterien, insbesondere durch Bildung des euklidischen Abstands, zwischen den in den CIELAB-Farbraum transformierten Vektoren, jeweils ein Farbunterschied zwischen dem Zentralvektor und jeweils einem der Nachbarvektoren ermittelt wird, und
- der Farbunterschied gegebenenfalls durch den Abstand der Vektoren im Farbraum dividiert wird,

- sodass für jeden Zentralvektor für jeden seiner Nachbarvektoren jeweils ein Farbunterschied zur Verfügung steht, und
- dass für jeden einem Vektor im Quantisierungsraum zugeordneten Zentralvektor aus den ihm zugeordneten Farbunterschieden zu seinen zugeordneten Nachbarvektoren der, insbesondere arithmetische, Mittelwert oder Median gebildet wird und dieser als Multiplikator $\Delta\hat{E}$ herangezogen und dem jeweiligen Vektor zugeordnet wird.

Bei der Auswahl der bei der Bestimmung der Farbunterschiede herangezogenen Zentralvektoren kann vorgesehen sein, dass innerhalb einer Umgebung derjenige Vektor als Zentralvektor ausgewählt wird, der dem arithmetischen Mittelwert der Summe aller Vektoren aus der jeweiligen Umgebung am nächsten liegt.

Zur vorteilhaften Auswahl der für die Ermittlung der Farbunterschiede herangezogenen Nachbarvektoren kann vorgesehen sein, dass als Nachbarvektoren eines Zentralvektors jeweils die Zentralvektoren von jeweils benachbarten Umgebungen herangezogen werden.

Um unterschiedliche Quantisierungen in unterschiedlichen Wellenlängenbereichen ausreichend berücksichtigen zu können, kann vorgesehen sein, dass der wahrnehmbare Farbunterschied durch den Mittelwert oder den Median der Quantisierungsintervalle dividiert wird.

Für die einfache und zweckdienliche Auswahl des Basisfarbvektors kann vorgesehen sein,

- dass der Basisfarbvektor aus einer vorgegebenen Umgebung um die beiden Farbvektoren gewählt wird,
- wobei der Basisfarbvektor insbesondere dem arithmetischen Mittelwert zwischen dem ersten Farbvektor und dem zweiten Farbvektor gleichgesetzt wird.

Um Farbunterschiede in unterschiedlichen Komponenten der Farbvektoren ausreichend berücksichtigen zu können, kann vorgesehen sein,

- dass die Differenz der Farbvektoren durch Subtraktion der einzelnen Komponenten der beiden Farbvektoren ermittelt wird
- dass die betragsmäßig größte Komponente der Differenz der Farbvektoren als dominante Komponente ermittelt wird und
- dass je ein Multiplikator durch Auswahl aus einer Anzahl vorgegebener Multiplikatoren in Abhängigkeit vom Basisfarbvektor sowie von der dominanten Komponente ermittelt wird,
- wobei der ausgewählte Multiplikator das Verhältnis des Abstands von in den CIELAB-Farbraum transformierten Farbvektoren zum Abstand dieser Farbvektoren im vorgegebenen Farbraum innerhalb einer vorgegebenen Umgebung des Basisfarbvektors zwischen zwei Vektoren angibt, die sich in der dominanten Komponente betragsmäßig stärker als in den übrigen Komponenten unterscheiden.

Hierbei können die Multiplikatorwerte bzw. die zugehörigen Messwerte vorteilhafterweise so berechnet werden,

- dass für jeden Vektor des Quantisierungsraums jeweils ein in der Umgebung der auf den Vektor abgebildeten Farbvektoren als Zentralvektor herangezogen wird, und dass innerhalb der Umgebung oder innerhalb einer weiteren Umgebung um den Zentralvektor eine Anzahl von Nachbarvektoren vorgegeben wird,

- dass dem Zentralvektor und/oder dem jeweiligen Vektor des Quantisierungsraums Nachbarvektoren zugewiesen werden, wobei jeder der Nachbarvektoren jeweils in einer der Komponenten gegenüber dem Zentralvektor betragsmäßig stärker als in den übrigen Komponenten verschoben ist,

- dass zwischen dem Zentralvektor und denjenigen seiner ihm zugeordneten Nachbarvektoren, die sich jeweils in einer der Komponenten vom dem Zentralvektor betragsmäßig stärker als in den übrigen Komponenten unterscheiden jeweils

- der Zentralvektor sowie der jeweilige Nachbarvektor nach einer vorgegebenen Vorschrift in den CIELB-Farbraum transformiert werden,

- nach vorgegebenen Kriterien, insbesondere durch Bildung des euklidischen Abstands, zwischen den in den CIELAB-Farbraum transformierten Vektoren, ein Farbunterschied ermittelt wird, und

- der Farbunterschied gegebenenfalls durch den Abstand der Vektoren im Farbraum dividiert wird,

- sodass für jeden Zentralvektor für jeden seiner Nachbarvektoren jeweils ein Farbunterschied zur Verfügung steht, und

- dass für jeden einem Vektor im Quantisierungsraum zugeordneten Zentralvektor für jede einzelne Koordinatenrichtung separat aus den dem Vektor zugeordneten Farbunterschieden zu seinen ihm zugeordneten Nachbarvektoren jeweils ein, insbesondere arithmetischer, Mittelwert oder Median gebildet wird dieser als Multiplikatorwert $\Delta\hat{E}$ herangezogen und dem jeweiligen Vektor für die jeweilige Komponente zugeordnet wird.

Eine einfache und zweckdienliche Datenhaltung von Multiplikatoren sieht vor, dass die einzelnen Multiplikatorwerte in einem Speicher abgespeichert vorliegen, wobei für jeden einzelnen Vektor des Quantisierungsraums jeweils separate Speicherbereiche für jede der Komponenten vorgesehen sind und der dem jeweiligen Basisvektor zugeordnete Multiplikator vor seiner Multiplikation mit dem Abstand in Abhängigkeit vom Vektor sowie von der dominanten Komponente aus dem Speicher abgerufen wird.

Erfindungsgemäß ist ferner eine Vorrichtung zur Bestimmung der Farbtreue und/oder zur Ermittlung des für den Menschen wahrnehmbaren Farbunterschieds zwischen zwei jeweils durch Farbvektoren vorgegebenen Farben, umfassend zumindest einen Farb-Helligkeitssensor, an dessen Ausgang ein Farbvektor in einem Farbraum anliegt, **gekennzeichnet durch**

- eine dem Farb-Helligkeitssensor nachgeschaltete Abstandsbildungseinheit, die den Farbabstand im Farbraum R, insbesondere in Form des Euklidischen Abstands, zwischen den beiden Farbvektoren ermittelt und an ihrem Ausgang zur Verfügung hält,

- eine dem Farb-Helligkeitssensor nachgeschaltete Quantisierungseinheit, der die beiden Farbvektoren zugeführt sind und die abhängig von einem der Farbvektoren oder beiden Farbvektoren jeweils einen Basisvektor ermittelt und anschließend eine Umgebung im Farbraum ermittelt, innerhalb der sich der Basisvektor befindet und an ihrem Ausgang einen dieser Umgebung zugeordneten Quantisierungsvektor zur Verfügung hält,

- einen Multiplikatorspeicher, in dem für jeden Quantisierungsvektor jeweils ein Multiplikatorwert, der das Verhältnis des Abstands von in den CIELAB-Farbraum transformierten Farbvektoren zum Abstand dieser Farbvektoren im vorgegebenen Farbraum innerhalb einer vorgegebenen Umgebung des Basisfarbvektors als Farbtreue oder Farbunterschieds angibt, wobei dem Multiplikatorspeicher der von der Quantisierungseinheit erstellte Quantisierungsvektor zugeführt ist und am Ausgang des Multiplikatorspeichers jeweils derjenige Multiplikatorwert abgespeichert vorliegt, der dem jeweiligen Quantisierungsvektor zugeordnet ist, sowie

- eine Multiplikatoreinheit, die dem Multiplikationsspeicher sowie der Abstandbildungseinheit nachgeschaltet ist und an deren Ausgang das Produkt aus dem Multiplikatorwert und dem Farbabstand als für den Menschen wahrnehmbarer Farbunterschied und/oder Farbtreue anliegt,

vorgesehen. Mit einer solchen Vorrichtung kann einfach und ressourcensparend die Farbtreue oder der für den Menschen wahrnehmbare Farbunterschied zwischen zwei durch Farbvektoren ermittelt werden.

Um Abweichungen von einem Sollwert einfach ermitteln zu können, kann ein Sollwertspeicher vorgesehen sein, in dem der zweite Farbvektor als Sollwert abgespeichert ist und der Abstandsbildungseinheit und der Quantisierungseinheit vorgeschaltet ist.

Um Farbunterschiede in unterschiedlichen Komponenten der Farbvektoren ausreichend berücksichtigen zu können, kann vorgesehen sein, dass

- eine Einheit zur Bildung der dominanten Komponente vorgesehen ist, der die Farbvektoren zugeführt sind, die eine vektorielle Differenz zwischen den beiden Farbvektoren bildet und die Position der betragsmäßig größten Komponente der Differenz der Farbvektoren an ihrem Ausgang zur Verfügung hält,

- der Multiplikatorspeicher für jeden der Quantisierungsvektoren jeweils so viele Multiplikatoren abgespeichert enthält, wie die Farbvektoren Komponenten aufweisen, wobei für jeden Quantisierungsvektor und für jede Koordinatenrichtung im Farbraum jeweils ein Multiplikatorwert abgespeichert ist,

- für jeden einem Vektor im Quantisierungsraum zugeordneten Zentralvektor für jede einzelne Koordinatenrichtung separat aus den dem Vektor zugeordneten Farbunterschieden zu seinen ihm zugeordneten Nachbarvektoren jeweils ein, insbesondere arithmetischer, Mittelwert oder Median abgespeichert vorliegt, und

- der Ausgang der Einheit zur Bildung der dominanten Komponente dem Multiplikatorspeicher zugeführt ist, wobei am Ausgang des Multiplikatorspeichers jeweils derjenige Multiplikator anliegt, der jeweils dem von der Quantisierungseinheit gebildeten Quantisierungsvektor und der von der Einheit abgegebenen dominanten Komponente zugeordnet ist.

Bevorzugte Ausführungsformen der Erfindung werden anhand Zeichnungen näher dargestellt. **Fig. 1** zeigt eine Farbabweichung im RGB-Farbraum sowie die zugehörige Farbabweichung im CIELAB-Farbraum. **Fig. 2** zeigt eine Quantisierung des RGB-Farbraums sowie die jeweilige Transformierte im CIELAB-Farbraum. **Fig. 3** zeigt die Bestimmung von Multiplikatoren zur Umrechung von Farbdifferenzen in die Farbtreue bzw. in den für den Menschen wahrnehmbaren Farbunterschied. **Fig. 4** zeigt eine Vorrichtung zur Durchführung einer Ausführungsform eines erfindungsgemäßen Verfahrens. **Fig. 5** zeigt eine weitere Vorrichtung zur Durchführung einer weiteren Ausführungsform eines erfindungsgemäßen Verfahrens.

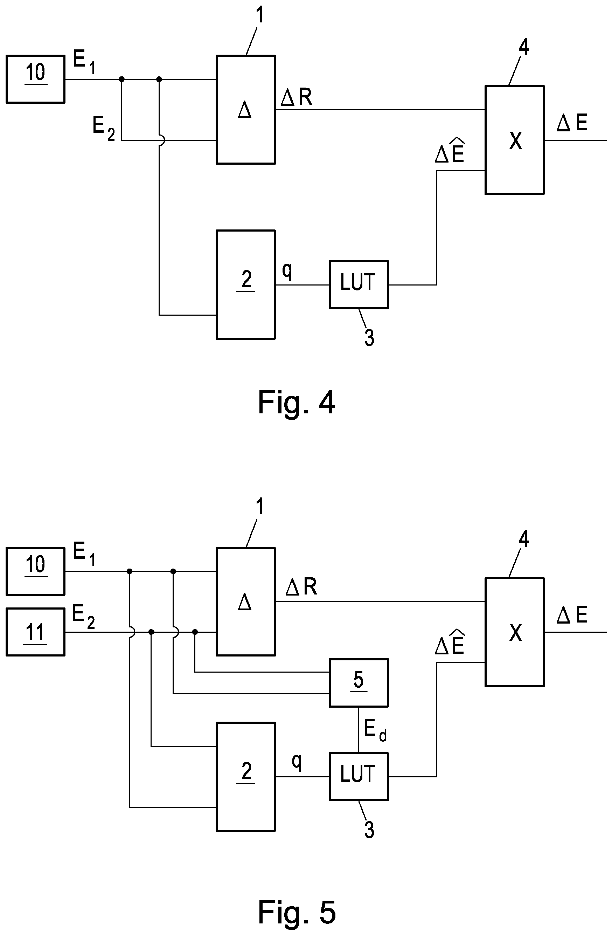

Bei typischen Helligkeitsmessungen von Objekten mit mehrfarbigen Pixelsensoren erhält man für jedes der Pixel, d. h. von jedem Pixelsensor 10 (**Fig. 4, 5**), jeweils mehrere Helligkeitswerte, von denen jeder jeweils einem vorgegebenen Wellenlängenbereich zugeordnet ist. Typischerweise werden für jedes Pixel jeweils drei Wellenlängenbereiche herangezogen, nämlich ein roter, ein grüner und ein blauer Wellenlängenbereich. Jedes Pixel liefert somit jeweils einen Farbvektor E mit drei Komponenten, von denen in dieser Ausführungsform die erste Komponente die Helligkeit im roten Wellenlängenbereich, die zweite Komponente die Helligkeit im grünen Wellenlängenbereich in die dritte Komponente die Helligkeit im blauen Wellenlängenbereich angibt. Jede der Komponenten des jeweiligen Farbevektors $E_1$, $E_2$ entspricht jeweils dem Helligkeitsmesswert eines Sensors 10, 11 (**Fig. 4**) für einen vorgegebenen Wellenlängenbereich.

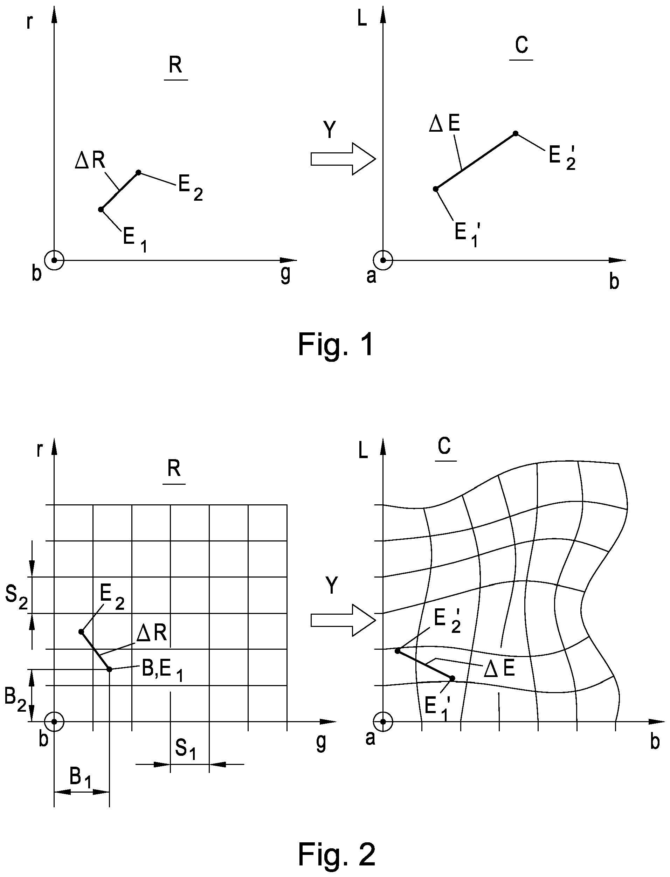

Jeder Sensor 10 liefert jeweils einen Farbvektor E1, E2. In der in **Fig. 1** dargestellten ersten Ausführungsform sind zwei mit jeweils einem Pixel aufgenommene Farbvektoren $E_1$, $E_2$ dargestellt, die von Objekten mit annähernd gleicher Farbgebung aufgenommen wurden. Die beiden Farbvektoren $E_1$, $E_2$ sind in Bezug auf den dreidimensionalen RGB-Farbraum $\underline{R}$ festgelegt.

In **Fig. 1** ist links ein dreidimensionaler RGB-Farbraum $\underline{R}$ dargestellt, wobei zwei Koordinatenrichtungen in der Zeichnungsebene liegen und die dritte Koordinatenrichtung b normal zur Zeichnungsebene liegt und in der Darstellung vernachlässigt wird. Die beiden übrigen Koordinatenrichtungen $r,g$ des Farbraums geben jeweils den Anteil der roten und grünen Komponente des jeweiligen Farbvektors E1 an.

Aufgrund der Unterschiedlichkeit der Farbgebung der Objekte weisen die beiden dargestellten Farbvektoren $E_1$, $E_2$ jeweils unterschiedliche Werte auf, zwischen den beiden Farbvektoren $E_1$, $E_2$ besteht ein Farbabstand $\Delta R$, der beispielsweise durch Bestimmung des euklidischen Abstands zwischen den beiden Farbvektoren $E_1$, $E_2$ gemäß $\Delta R = \| E_1 - E_2 \|_2$ ermittelt werden kann.

Aus dem Stand der Technik ist es bekannt, die beiden Farbvektoren $E_1$, $E_2$ in einen CIELAB-Farbraum $\underline{C}$ zu transformieren. Hierfür werden die Farbvektoren $E_1$, $E_2$ einer Transformationsvorschrift Y unterzogen.

Anhand eines Farbcharts, auf dem Farben aufgedruckt sind, deren Entsprechungen im CIELAB-Farbraum $\underline{C}$ bekannt sind, sowie der bei der Aufnahme dieses Farbcharts ermittelten Farbwerte, wird eine Transformationsvorschrift Y zur Transformation der Farbvektoren $E_1$, $E_2$ in den CIELAB-Farbraum $\underline{C}$ ermittelt, mit der für jeden Farbvektor $E_1$, $E_2$ dessen jeweilige Entsprechung als CIELAB-Farbvektoren $E_1'$, $E_2'$ gemäß E1'=Y($E_1$), E2'=Y($E_2$) im CIELAB-Farbraum $\underline{C}$ ermittelt wird. Eine solche Transformationsvorschrift Y ist typischerweise äußerst komplex, die Bestimmung der CIELAB-Farbvektoren $E_1'$, $E_2'$ durch Anwendung der Transformationsvorschrift Y auf die beiden Farbvektoren $E_1$, $E_2$ ist rechenintensiv.

Zur Bestimmung der Farbtreue $\Delta E$ oder des für den Menschen wahrnehmbaren Farbunterschieds $\Delta E$ kann der euklidische Abstand zwischen den beiden CIELAB-Farbvektoren $E_1'$, $E_2'$ ermittelt werden. Eine verbesserte Berechnungsvorschrift zur Bestimmung der Farbtreue $\Delta E$ oder des Farbunterschieds $\Delta E$, die physiologische Eigenschaften des menschlichen Auges besser berücksichtigt, weist zudem noch weitere komplexe Berechnungsschritte auf. Soll die Bestimmung der Farbtreue $\Delta E$ oder des Farbunterschieds $\Delta E$ für ganze Bildbereiche mit Seitenlängen von mehreren tausend Pixeln mehrmals pro Sekunde vorgenommen werden, wäre die Bestimmung der Farbtreue $\Delta E$ oder des Farbunterschieds $\Delta E$ äußerst ressourcenintensiv und könnte nur mit außerordentlicher Rechenleistung durchgeführt werden.

Aus diesem Grund werden sämtliche Berechnungsschritte, die mit der Transformation der Farbvektoren $E_1$, $E_2$ in den CIELAB-Farbraum $\underline{C}$ oder der Bestimmung der Farbtreue $\Delta E$ oder des Farbunterschieds $\Delta E$ in Zusammenhang stehen, im Zuge eines Kalibrierverfahrens durchgeführt.

Ziel des Kalibrierungsverfahrens ist es, vorab eine Beziehung zwischen dem Farbabstand $\Delta R$ und dem jeweils korrespondierenden Farbunterschied $\Delta E$ im CIELAB-Farbraum $\underline{C}$ zu ermitteln, um die aufwendige Ermittlung des eigentlichen Farbunterschieds $\Delta E$ auf Grundlage des leichter zu ermittelnden Farbabstands $\Delta R$ im Farbraum $\underline{R}$ vornehmen zu können. Da sich diese Beziehung je nach Lage der beiden Farbvektoren $E_1$, $E_2$ im Farbraum $\underline{R}$ ändert, wird durch Kalibrierung ein lokaler linearer Zusammenhang zwischen dem Farbanstand $\Delta R$ und dem jeweils korrespondierenden Farbunterschied $\Delta E$ für eine vorgegebene Umgebung u rund um einen Zentralvektor $e_z$ innerhalb des Farbraums $\underline{R}$ ermittelt. Es wird dabei zur Approximation und Vereinfachung davon ausgegangen, dass die beiden Farbvektoren $E_1$, $E_2$ nahe beieinander und näherungsweise innerhalb derselben Umgebung oder zumindest im Nahebereich dieser Umgebung liegen.

Um vorab für jeden Teilbereich des Farbraums $\underline{R}$ jeweils eine einfach durchzuführende Umrechnung des Farbanstands $\Delta R$ in den jeweils korrespondierenden Farbunterschied $\Delta E$ im CIELAB-Farbraum $\underline{C}$ zur Verfügung zu haben, wird der Farbraums $\underline{R}$ in eine Anzahl von Umgebungen u unterteilt, indem eine Anzahl von Zentralvektoren $e_z$ innerhalb des Farbraums $\underline{R}$ vorgegeben wird und für jeden dieser Zentralvektoren $e_z$ im Farbraum $\underline{R}$ jeweils eine Um-

gebung u um den jeweiligen Zentralvektor $e_z$ vorgegeben wird. In der vorliegenden Ausführungsform liegen die einzelnen Zentralvektoren $e_z$ jeweils rasterförmig angeordnet im Farbraum $\underline{R}$ verteilt. Mit Ausnahme der Zentralvektoren $e_z$, deren Umgebung u den Farbraums $\underline{R}$ berandet, sind jedem Zentralvektor $e_z$ jeweils eine Anzahl von sechs Nachbarvektoren $N_1(e_Z)$, ..., $N_n(e_Z)$ zugeordnet, wobei in dieser Ausführungsform als Nachbarvektoren $N_1(e_Z)$, ..., $N_n(e_Z)$ diejenigen Zentralvektoren $e_z$ herangezogen werden, deren Umgebung u an die Umgebung des zuvor genannten Zentralvektors angrenzt. Selbstverständlich können als Nachbarvektoren auch beliebige andere Farbvektoren festgelegt werden, auch kann die Anzahl der Nachbarvektoren variiert werden. Jeder der sechs Nachbarvektoren $N_1(e_Z)$, ..., $N_n(e_Z)$ unterscheidet sich vom Zentralvektor $e_z$ jeweils in nur einer seiner Komponenten um ein vorab vorgegebenes Quantisierungsintervall $S_1$, $S_2$, ..., $S_n$. Der Abstand zwischen einem Zentralvektor und seinem jeweiligen Nachbarvektor $N_1(e_Z)$, ..., $N_n(e_Z)$ entspricht abhängig von der jeweils unterscheidenden Komponente dem Quantisierungsintervall $S_1$, $S_2$, ..., $S_n$. Zentralvektoren $e_z$ und ihnen zugeordnete Nachbarvektoren $N_1(e_Z)$, ..., $N_n(e_Z)$, die sich in der ersten Komponente unterscheiden, weisen jeweils als Abstand den Wert des ersten Quantisierungsintervalls $S_1$ in der ersten Koordinatenrichtung auf, Zentralvektoren $e_z$ und ihnen zugeordnete Nachbarvektoren $N_1(e_Z)$, ..., $N_n(e_Z)$, die sich in der zweiten Komponente unterscheiden, weisen jeweils als Abstand den Wert des zweiten Quantisierungsintervalls $S_2$ auf usw. Die Position der Zentralvektoren $e_Z$ kann durch die folgende Formel angegeben werden,

$$ez(i, j, k) = [floor(S_1/2 + S_1 \cdot i), floor(S_2/2 + S_2 \cdot j), floor(S_3/2 + S_3 \cdot k)]$$

wobei jeweils für den Parameter i ganzzahlige Werte zwischen 0 und $R_1/S_1$, für den Parameter j ganzzahlige Werte zwischen 0 und $R_2/S_2$ und für den Parameter k ganzzahlige Werte zwischen 0 und $R_3/S_3$ einsetzbar sind und $R_1$, $R_2$, und $R_3$ die jeweiligen Maximalwerte für die jeweilige Komponente des Farbraums $\underline{R}$ bezeichnen. Die Funktion floor bezeichnet jeweils den nächstkleineren ganzzahligen Wert für eine reelle oder rationale Zahl.

Der gesamte Farbraum $\underline{R}$ wird lückenlos von Umgebungen u ausgefüllt, die jeweils einen der Zentralvektoren $e_z$ umgeben. Die Zentralvektoren $e_z$ werden in dieser bevorzugten Ausführungsform der Erfindung rasterförmig in einem äquidistanten Gitter festgelegt, wobei sämtliche Farbvektoren im Farbraum $\underline{R}$, die dem jeweiligen Zentralvektor $e_z$ näher liegen als einem anderen Zentralvektor $e_z$ der Umgebung u dieses Zentralvektors $e_z$ zugewiesen werden.

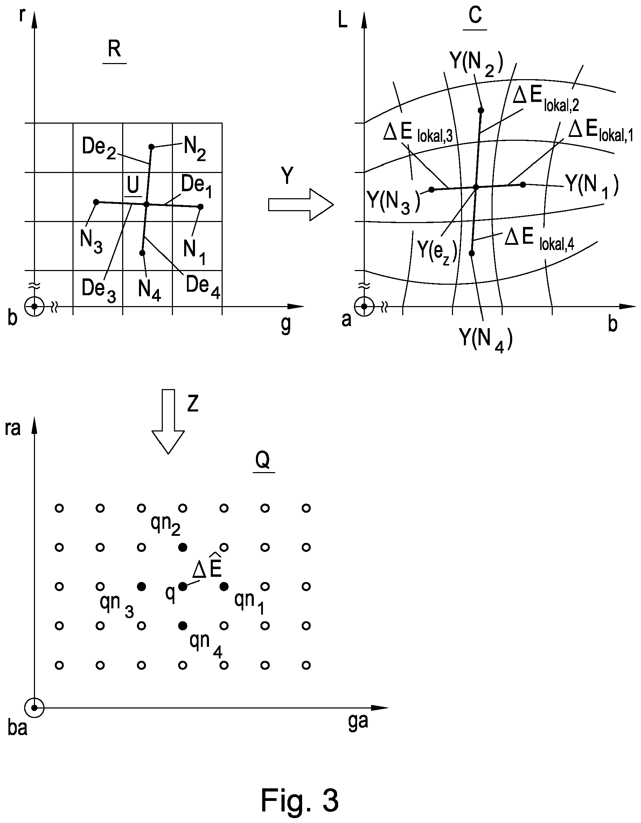

Im folgenden wird eine Zuordnung Z (**Fig. 3**) hergestellt, die für jede Umgebung u sowie für den jeweils zugehörigen Zentralvektor $e_z$ der Umgebung u jeweils einen Quantisierungsvektor q in einem Quantisierungsraum $\underline{Q}$ angibt. Die Zuordnung Z zwischen der Umgebung u bzw. dem jeweiligen zugehörigen Zentralvektor $e_z$ und dem Quantisierungsvektor q ist bijektiv. Zudem werden einander benachbarte Umgebungen u jeweils auf benachbart liegende Quantisierungsvektoren q abgebildet.

Für jeden Farbvektor E mit den einzelnen Komponenten $e_1$, $e_2$, ..., $e_n$ besteht ferner eine eindeutige Zuordnung X zu einem Zentralvektor $e_z$, die bei der vorstehend beschriebenen Zuordnung von Umgebungen u zu Zentralvektoren $e_z$ auf die folgende Art hergestellt werden kann:

$$e_z(E) = [e_1 \cdot floor(B_1/S_1) + floor(S_1/2), e_2 \cdot floor(B_2/S_2) + floor(S_2/2),$$
$$..., e_n \cdot floor(B_n/S_n) + floor(S_n/2)]$$

Im Quantisierungsraum $\underline{Q}$ steht für jeden Zentralvektor $e_z$ jeweils ein Quantisierungsvektor q zur Verfügung. Jedem Zentralvektor $e_z(i, j, k) = [floor(S_1/2 + S_1 \cdot i), floor(S_2/2 + S_2 \cdot j), floor(S_3/2 + S_3 \cdot k)]$ wird durch die Zuordnung Z jeweils ein Quantisierungsvektor $q(e_z) = [i, j, k]$ zugewiesen, wobei die Parameter i, j und k wie voranstehend angegeben beschränkt sind. Durch die Zuordnung Z wird somit jeder Zentralvektor $e_z$ bijektiv auf einen Quantisierungsvektor q abgebildet.

Durch Zusammensetzung der Zuordnungen X und Z kann für jeden Farbvektor E jeweils ein Quantisierungsvektor q gefunden werden, der einem Zentralvektor $e_z$ zugeordnet ist, innerhalb dessen Umgebung u sich der Farbvektor E befindet.

Im folgenden wird für jede Umgebung u jeweils eine lokale Annäherung für den Zusammenhang zwischen dem Farbabstand $\Delta R$ im Farbraum $\underline{R}$ und der jeweiligen Farbtreue $\Delta E$ im CIELAB-Farbraum gesucht, wobei angenommen wird, dass der Farbabstand $\Delta R$ im Farbraum und die Farbtreue $\Delta E$ im CIELAB-Raum näherungsweise linear voneinander abhängig sind. Für jede Umgebung u wird ein Speicher zum Abspeichern des Verhältnisses zwischen dem Farbabstand $\Delta R$ und der Farbtreue $\Delta E$ zur Verfügung gestellt.

Um das Verhältnis zwischen dem Farbabstand $\Delta R$ und der Farbtreue $\Delta E$ im Bereich der jeweiligen Umgebung u zu ermitteln, werden in einem Kalibrierschritt der jeweilige Zentralvektor $e_z$ und seine ihm zugeordneten Nachbarvektoren $N_1(e_Z)$, ..., $N_n(e_Z)$ der Farbabstand $De_1$, $De_2$, ... $De_n$ ermittelt. Dies kann im vorliegenden Fall durch die Bildung des Euklidischen Abstands erfolgen, der aufgrund der konkreten Anordnung der Zentralvektoren $e_z$ dem Betrag der Differenz der einzig unterschiedlichen Komponente der jeweiligen Vektoren gleich ist. Für jeden Nachbarvektor $N_1(e_Z)$, ...,

$N_n(e_Z)$ wird separat jeweils eine Koordinatendifferenz ermittelt, sodass in der vorliegenden Ausführungsform für einen Zentralvektor $e_z$ mit sechs Nachbarvektoren $N_1(e_Z)$, ..., $N_n(e_Z)$ sechs Farbabstände $De_1$, ..., $De_6$ vorliegen:

$$De_i = \| e_z - N_i(e_Z) \|_2$$

In einem weiteren Schritt werden der Zentralvektor $e_z$ sowie seine Nachbarvektoren $N_1(e_Z)$, ..., $N_6(e_Z)$ in den CIELAB-Farbraum C transformiert, wobei man durch Anwendung der Transformationsvorschrift Y die jeweiligen Entsprechungen $Y(e_z)$ des Zentralvektors ez sowie die Entsprechungen $Y(N_1(e_Z))$, ..., $Y(N_6(e_Z))$ seiner Nachbarvektoren im CIELAB-Farbraum **C** transformiert. Es wird zwischen jeder Entsprechung $Y(N_1(e_Z))$, ..., $Y(N_6(e_Z))$ der Nachbarvektoren und der Entsprechung $\overline{Y}(e_z)$ des Zentralvektors $e_z$ der Abstand $\Delta E_{lokal}$ im CIELAB-Farbraum **C** ermittelt. Dies kann beispielsweise durch Bildung des euklidischen Abstands oder aber auch durch andere bekannte Abstandbildungsvorschriften vorgenommen werden, die beispielsweise in "Klaus Witt, CIE Color Differnce Metrics, pp. 79-100. In: Schanda, J.: Colorimetry: Understanding the CIE System. Wiley-Interscience (2007)" ausgeführt sind.

Jeder der einzelnen ermittelten Abstände $\Delta E_{lokal,i}$ wird durch den Abstand $De_i$ der jeweiligen Vektoren im Farbraum R dividiert; unter den so erhaltenen sechs Quotienten wird der Median oder der Mittelwert ermittelt und der jeweiligen Umgebung u und dem dieser Umgebung u zugewiesenen Quantisierungsvektor q als Multiplikatorwert $\Delta\hat{E}(q)$ zugeordnet. Nach der vorstehend genannten Vorschrift wird für jeden Zentralvektor $e_z$ sowie die ihm zugewiesene Umgebung u jeweils ein Multiplikatorwert $\Delta\hat{E}(q)$ ermittelt und dieser wird dem jeweiligen Quantisierungsvektor q zugewiesen:

$$\Delta\hat{E}(q) = med(\Delta E_{lokal,i} / De_i)$$

Die einzelnen Multiplikatorwert $\Delta\hat{E}(q)$ werden in dieser konkreten Ausführungsform der Erfindung jeweils in einem Speicher 3 abgelegt und für die weitere Abfrage zur Verfügung gehalten.
In einer alternativen Ausführungsform der Erfindung, die im übrigen der ersten Ausführungsform der Erfindung entspricht, wird unter den ermittelten Abständen $\Delta E_{lokal}$ sowie unter den Abständen $De_i$ jeweils separat der Median oder Mittelwert gebildet und der Multiplikatorwert $\Delta\hat{E}(q)$ wird als Quotient der Mediane (med) oder Mittelwerte (MW) gemäß

$$\Delta\hat{E}(q) = med(\Delta E_{lokal,i}) / med(De_i) \quad oder \quad \Delta\hat{E}(q) = MW(\Delta E_{lokal,i}) / MW(De_i)$$

gebildet.
Im Folgenden werden die einzelnen Schritte zur raschen Bestimmung der Farbtreue $\Delta E$ und/oder zur Ermittlung des für den Menschen wahrnehmbaren Farbunterschieds $\Delta E$ näher dargestellt, wobei vorausgesetzt wird, dass die einzelnen Multiplikatorwerte $\Delta\hat{E}(q)$ für die Quantisierungsvektoren q bzw. für die Umgebungen u jeweils zur Verfügung stehen und im Speicher 3 abgespeichert vorliegen.
In dieser Ausführungsform eine Messung mit einem Sensor 10 durchgeführt, in dessen Aufnahmebereich zu unterschiedlichen Zeitpunkten zwei Objekte mit annähernd derselben Oberflächenfarbe gelangen. Ziel der Messung ist es, Unterschiede der Farbe zwischen den Objekten zu detektieren, wobei jeweils zu überprüfen ist, dass für den Menschen sichtbare Farbunterschiede $\Delta E$ auch detektiert werden.
Alternativ besteht auch die Möglichkeit, dass zwei Sensoren 10 herangezogen werden, von denen einer den ersten Farbwert $E_1$ und der andere den zweiten Farbwert $E_2$ ermittelt. Die Bestimmung der Farbwerte $E_1$, $E_2$ mit den Sensoren 10 kann entweder gleichzeitig vorgenommen werden oder aber es kann der von einem der Sensoren 10 ermittelte Farbwerte $E_1$, $E_2$ abgespeichert und mit einem später aufgenommenen Farbwert verglichen werden.
Im Zuge der beiden Messungen der beiden Objekte mit dem Sensor 10 werden zwei voneinander abweichende Farbwerte $E_1$, $E_2$ ermittelt. Es wird der Farbabstand $\Delta R$ zwischen den beiden Farbvektoren $E_1$, $E_2$ ermittelt, wobei im vorliegenden Fall der euklidische Abstand als Farbabstand $\Delta R$ gewählt wird. Alternativ könnten auch andere Abstandsbestimmungsverfahren verwendet werden, die insbesondere die Differenz einer der Komponenten der beiden Farbvektoren $E_1$, $E_2$ stärker gewichten.
Weiters wird basierend auf den beiden Farbvektoren $E_1$, $E_2$ ein Basisvektor B ermittelt, der innerhalb einer vorgegebenen Umgebung um die beiden Farbvektoren $E_1$, $E_2$ liegt. Im vorliegenden Fall wird der Basisvektor B dem ersten Farbvektor $E_1$ gleichgesetzt. Alternativ könnte auch der zweite Farbvektor $E_2$ oder der arithmetische Mittelwert der Farbvektoren $E_1$, $E_2$ als Basisvektor B herangezogen werden. Anschließend wird für den Basisvektor B der jeweilige Zentralvektor $e_z$ sowie dessen zugeordneter Quantisierungsvektor q gesucht, innerhalb dessen Umgebung u sich der Basisvektor B befindet. Der dem jeweiligen Quantisierungsvektor q zugeordnete Multiplikatorwert $\Delta\hat{E}(q)$ wird aus dem Speicher 3 abgefragt und mit dem jeweiligen Farbabstand $\Delta R$ mulitpliziert, wobei das Ergebnis dem für den Menschen wahrnehmbaren Farbunterschied ΔE = ΔR · ΔÊ(q) zwischen den beiden vom Sensor aufgenommenen Objekten gleichgehalten wird.

In **Fig. 4** ist eine Vorrichtung zur Detektion des für den Menschen wahrnehmbaren Farbunterschieds ΔE dargestellt. Es ist ein Sensor 10 vorgesehen, der zu unterschiedlichen Zeitpunkten von unterschiedlichen Objekten Farbvektoren $E_1$, $E_2$ ermittelt, die miteinander verglichen werden sollen. Es werden zwei Farbvektoren $E_1$, $E_2$, zu unterschiedlichen Zeitpunkten von unterschiedlichen Objekten ermittelt und miteinander verglichen. Zu diesem Zweck werden die vom Sensor 10 ermittelten Farbvektoren $E_1$, $E_2$, gegebenenfalls nach erfolgter Zwischenspeicherung der Abstandsbildungseinheit 1 und einer Quantisierungseinheit 2 zugeführt.

Alternativ besteht auch die Möglichkeit, dass zwei Sensoren 10 herangezogen werden, von denen einer den ersten Farbwert $E_1$ und der andere den zweiten Farbwert $E_2$ ermittelt. Die Bestimmung der Farbwerte $E_1$, $E_2$ mit den Sensoren 10 kann entweder gleichzeitig vorgenommen werden oder aber es kann der von einem der Sensoren 10 ermittelte Farbwerte $E_1$, $E_2$ abgespeichert und mit einem später aufgenommenen Farbwert verglichen werden.

Zudem wird der zweite Farbvektor $E_2$ und gegebenenfalls auch der erste Farbvektor $E_1$ an eine Quantisierungseinheit 2 übermittelt. Diese Quantisierungseinheit 2 setzt den Basisvektor B dem zweiten Farbvektor $E_1$ gleich und ermittelt den dem Basisvektor $B=E_2$ zugeordneten Quantisierungsvektor q. Alternativ können auch, wie vorstehend dargestellt, andere Methoden zur Bildung des Basisvektors B herangezogen werden, die entweder nur den ersten Farbvektor $E_1$ oder aber beiden Farbvektoren $E_1$, $E_2$ benötigen. Dementsprechend sind die benötigten Farbvektoren der Quantisierungseinheit 2 zuzuführen.

Der Quantisierungsvektor q ist dem Multiplikatorspeicher 3 zugeführt, in dem für jeden Quantisierungsvektor q jeweils ein Messwert ΔÊ(q) abgespeichert ist. Am Ausgang des Multiplikatorspeichers 3 liegt derjenige Messwert AÊ(B) an, der jeweils demjenigen Quantisierungsvektor q(B) zugeordnet ist, der mit dem Basisvektor B korrespondiert.

Der Ausgang des Multiplikatorspeichers 3 und der Ausgang der Abstandsbildungseinheit 1 sind mit dem Eingang einer Multiplikationseinheit 4 verbunden. Am Ausgang der Multiplikationseinheit 4 liegt ein Signal an, das den für den Menschen sichtbaren Unterschied ΔE zwischen den beiden zu vergleichenden Farbvektoren $E_1$, $E_2$ angibt.

In einer alternativen Ausführungsform, die bis auf die im folgenden genannten Unterschiede der ersten Ausführungsform der Erfindung entspricht, wird einer der Farbvektoren $E_1$ durch Messung mit einem Sensor 10 als Istwert ermittelt, während der zweite Farbvektor $E_2$ als Sollwert in einem Sollwertspeicher 11 vorliegt. In diesem Zusammenhang wird der Begriff der Farbtreue ΔE als für den Menschen sichtbare Abweichung zwischen dem vom Sensor 10 ermittelten Istwert und dem vorgegebenen Sollwert festgelegt. Im vorliegenden Fall wird der Sollwert-Farbvektor $E_2$ in Form seiner Entsprechung $E_2'=Y(E_2)$ im CIELAB-Farbraum C angegeben. Dieser Farbvektor $E_2$ wird anschließend in den Farbraum **R** zurücktransformiert und liegt nunmehr im Sollwertspeicher 11 vor. Im vorliegenden Fall wird der Sollwert-Farbvektor als Basisvektor B für die Bestimmung des Multiplikatorwerts ΔÊ herangezogen.

Eine **zweite Ausführungsform** der Erfindung berücksichtigt, in welcher Farbkomponente sich die miteinander zu vergleichenden Farbvektoren $E_1$, $E_2$ am stärksten unterscheiden. Diese Ausführungsform entspricht im wesentlichen der ersten Ausführungsform der Erfindung, wobei im folgenden ausschließlich auf die Abweichungen zu dieser eingegangen wird:

Nach der Bestimmung oder Ermittlung der beiden Farbvektoren $E_1$, $E_2$ wird die vektorielle Differenz $dR= E_1 - E_2$ der Farbvektoren $E_1$, $E_2$ durch Subtraktion der einzelnen Komponenten der beiden Farbvektoren $E_1$, $E_2$ ermittelt. Anschließend wird die betragsmäßig größte Komponente der Differenz dR der Farbvektoren $E_1$, $E_2$ als dominante Komponente $E_d$ ermittelt. Haben die beiden Farbvektoren $E_1$, $E_2$ beispielsweise die Werte E1=[10, 50, 90] und E2 = [30, 20, 40], so ergibt sich als Differenz dR=[-20, 30, 50]. Die dominante Komponente $E_d$ ist als betragsmäßig größte Komponente die dritte Komponente, d.h. im vorliegenden Fall ist die blaue Komponente die dominante Komponente $E_d=3$.

Als Basisvektor B wird, wie in der ersten Ausführungsform der erste Farbvektor $E_1$ herangezogen, wobei die in Bezug auf die erste Ausführungsform gezeigten Alternativen auch anwendbar sind.

Für jeden Quantisierungsvektor q des Quantisierungsraums **Q** werden im Zuge des Kalibrierverfahrens so viele Multiplikatorwerte ΔÊ ermittelt, wie die Farbvektoren $E_1$, $E_2$ Komponenten aufweisen. Im vorliegenden Fall werden Farbvektoren $E_1$, $E_2$ mit drei Komponenten verwendet, es werden somit drei separate Multiplikatorwerte ΔÊ für jeden Quantisierungsvektor q bestimmt, von denen jeder jeweils einer der Farben oder Komponenten des Farbvektors $E_1$, $E_2$ zugeordnet ist.

Jeder der einem Quantisierungsvektor q zugeordneten Multiplikatoren ΔÊ gibt das Verhältnis des Abstands $AE_{lokal,1}$ , ..., $ΔE_{lokal,n}$ von in den CIELAB-Farbraum **C** transformierten Farbvektoren zum Abstand $De_1$, ..., $De_n$ dieser Farbvektoren $E_1$, $E_2$ im vorgegebenen Farbraum **R** innerhalb einer vorgegebenen Umgebung u des Basisfarbvektors B zwischen zwei Vektoren näherungsweise an, die sich ausschließlich oder hauptsächlich in der dominanten Komponente $E_d$ unterscheiden.

Im vorliegenden Fall verfügt der in **Fig. 3** dargestellte Zentralvektor $e_Z$ in einem dreidimensionalen Raum über sechs Nachbarvektoren $N_1(e_Z)$, ..., $N_6(e_Z)$, von denen aufgrund der Projektion der Darstellung lediglich vier Nachbarvektoren $N_1(e_Z)$, ..., $N_4(e_Z)$ dargestellt sind. Die beiden übrigen nicht dargestellten Nachbarvektoren $N_5(e_Z)$, ..., $N_6(e_Z)$ sind jeweils in oder entgegen der blauen Koordinatenrichtung b gegenüber dem Zentralvektor $e_Z$ jeweils um die Länge

des jeweiligen Quantisierungsintervalls $S_3$ verschoben.

Es werden nunmehr für die beiden Nachbarvektoren $N_1(e_Z)$, ..., $N_3(e_Z)$, die gegenüber dem Zentralvektor $e_z$ entlang der oder entgegen die Richtung der ersten, roten Komponente verschoben sind oder die sich lediglich in ihrer ersten, roten Komponente vom Zentralvektor $e_z$ unterscheiden, separat der Abstand $\Delta E_{lokal,1}$ $\Delta E_{lokal,3}$ im CIELAB-Farbraum $\underline{C}$ sowie der Abstand $De_1$, $De_3$ im Farbraum $\underline{R}$ gebildet. Es wird nur zwischen der Abständen $\Delta E_{lokal,1}$ $AE_{lokal,3}$ der erste Mittelwert und nur zwischen den beiden Abständen $De_1$, $De_3$ im Farbraum $\underline{R}$ der zweite Mittelwert gebildet. Anschließend wird der erste, der ersten Farbe zugeordnete Multiplikator $\Delta\hat{E}_1(q)$ als Quotient der beiden Mittelwerte festgesetzt und dem jeweiligen Quantisierungsvektor q zugeordnet.

Dieser Vorgang wird nunmehr mit den beiden Nachbarvektoren $N_2(e_Z)$, ..., $N_4(e_Z)$, wiederholt, die gegenüber dem Zentralvektor ez entlang der oder entgegen die Richtung der zweiten, grünen Komponente verschoben sind oder die sich lediglich in ihrer zweiten, grünen Komponente vom Zentralvektor $e_z$ unterscheiden, und separat der Abstand $\Delta E_{lokal,2}$ $\Delta E_{lokal,4}$ im CIELAB-Farbraum $\underline{C}$ sowie der Abstand $De_2$, $De_4$ im Farbraum $\underline{R}$ gebildet. Es wird nur zwischen der Abständen $\Delta E_{lokal,2}$ $AE_{lokal,4}$ der erste Mittelwert und nur zwischen den beiden Abständen $De_2$, $De_4$ im Farbraum R der zweite Mittelwert gebildet. Anschließend wird der zweite, der zweiten Farbe zugeordnete Multiplikator $\Delta\hat{E}_2(q)$ als Quotient der beiden Mittelwerte festgesetzt und dem jeweiligen Quantisierungsvektor q zugeordnet.

Dieser Vorgang wird schließlich mit den beiden Nachbarvektoren $N_5(e_Z)$, ..., $N_6(e_Z)$, wiederholt, die gegenüber dem Zentralvektor ez entlang der oder entgegen die Richtung der dritten, blauen Komponente verschoben sind oder die sich lediglich in ihrer dritten, blauen Komponente vom Zentralvektor $e_z$ unterscheiden, und separat der Abstand $\Delta E_{lokal,5}$ $\Delta E_{lokal,6}$ im CIELAB-Farbraum $\underline{C}$ sowie der Abstand $De_5$, $De_6$ im Farbraum $\underline{R}$ gebildet. Es wird nur zwischen der Abständen $\Delta E_{lokal,5}$ $\Delta E_{lokal,6}$ der erste Mittelwert und nur zwischen den beiden Abständen $De_5$, $De_6$ im Farbraum $\underline{R}$ der zweite Mittelwert gebildet. Anschließend wird der dritte, der dritten Farbe zugeordnete Multiplikator $\Delta\hat{E}_3(q)$ als Quotient der beiden Mittelwerte festgesetzt und dem jeweiligen Quantisierungsvektor q zugeordnet.

Abhängig von der dominanten Komponente $E_d$ wird nunmehr derjenige im Kalibrierverfahren erhaltene Multiplikator $\Delta\hat{E}_3(B)$ ausgewählt, der dieser dominanten Komponente $E_d$ zugeordnet ist, im vorliegenden Fall ist die dominante Komponente $E_d$ mit $E_d=3$ festgelegt, sodass der der dritten Farbe zugeordnete Multiplikator $\Delta\hat{E}_3(B)$ ausgewählt wird. Der für den Menschen wahrnehmbare Farbunterschied wird somit gemäß $\Delta E = \Delta R \cdot \Delta\hat{E}_3(B)$ ermittelt.

**Fig. 5** zeigt eine Vorrichtung zur Durchführung des im zweiten Ausführungsbeispiel der Erfindung dargestellten Verfahrens. Es ist ein Speicher 11 vorgesehen, in dem der zweite Farbwert $E_2$ als Sollwert abgespeichert ist. Ferner ist ein Sensor 10 vorgesehen, der die vom zu inspizierenden Objekt abgegebenen Helligkeitswerte für die vorgegebenen Wellenlängen oder Wellenlängenbereiche ermittelt und an seinem Ausgang einen Farbvektor $E_1$ abgibt.

Die beiden Farbvektoren $E_1$, $E_2$ werden einer Abstandsbildungseinheit 1 zugeführt, die den Euklidischen Abstand $\Delta R$ zwischen den Farbvektoren $E_1$, $E_2$ bildet und an ihrem Ausgang zur Verfügung stellt.

Weiters ist eine Einheit 5 zur Bildung der dominanten Komponente Ed vorgesehen, der die beiden Farbvektoren $E_1$, $E_2$ zugeführt sind. Die Einheit 5 zur Bildung der dominanten Komponente $E_d$ subtrahiert jeweils die einander entsprechenden Komponenten der beiden Farbvektoren $E_1$, $E_2$ voneinander und ermittelt unter den jeweiligen Differenzen die betragsgrößte Differenz. Am Ausgang der Einheit 5 zur Bildung der dominanten Komponente $E_d$ liegt ein Signal an, das jeweils die betragsgrößte Komponente bezeichnet, ist die betragsgrößte Komponente beispielsweise die erste Komponente, so hat $E_d$ den Wert 1 usw.

Zudem wird der zweite Farbvektor $E_2$ und gegebenenfalls auch der erste Farbvektor $E_1$ an eine Quantisierungseinheit 2 übermittelt. Diese Quantisierungseinheit 2 bestimmt den Basisvektor B als den zweiten Farbvektor $E_1$ und ermittelt den dem Basisvektor $B=E_2$ zugeordneten Quantisierungsvektor q. Alternativ können auch, wie vorstehend dargestellt, andere Methoden zur Bildung des Basisvektors B herangezogen werden, die entweder nur den ersten Farbvektor $E_1$ oder aber beiden Farbvektoren $E_1$, $E_2$ benötigen. Dementsprechend sind die benötigten Farbvektoren der Quantisierungseinheit 2 zuzuführen.

Der Quantisierungsvektor q und der Ausgang der Einheit 5 zur Bildung der dominanten Komponente $E_d$ sind dem Multiplikatorspeicher 3 zugeführt, in dem für jeden Quantisierungsvektor q und für jede Komponente jeweils ein Messwert $\Delta\hat{E}_1(B)$, $\Delta\hat{E}_2(B)$, $\Delta\hat{E}_3(B)$ abgespeichert ist. Am Ausgang des Multiplikatorspeichers 3 liegt derjenige Messwert $\Delta\hat{E}_1(B)$, $\Delta\hat{E}_2(B)$, $\Delta\hat{E}_3(B)$ an, der jeweils dem dem Basisvektor B zugeordneten Quantisierungsvektor und der dominanten Komponente $E_d$ zugeordnet ist.

Der Ausgang des Multiplikatorspeichers 3 und der Ausgang Abstandsbildungseinheit 1 sind mit dem Eingang einer Multiplikationseinheit 4 verbunden. Am Ausgang der Multiplikationseinheit 4 liegt ein Signal an, das die Farbtreue $\Delta E$ in codierter Form enthält.

Alternativ können, wie auch in **Fig. 4** dargestellt, zwei Farbvektoren, die zu unterschiedlichen Zeitpunkten von unterschiedlichen Objekten ermittelt worden sind miteinander verglichen werden. Zu diesem Zweck werden die vom Sensor 10 ermittelten Farbvektoren E1, E2, gegebenenfalls nach erfolgter Zwischenspeicherung der Abstandsbildungseinheit 1, der Einheit 5 zur Bildung der dominanten Komponente $E_d$ sowie der Quantisierungseinheit 2 zugeführt.

**Patentansprüche**

1. Verfahren zur Bestimmung der Farbtreue ($\Delta E$) und/oder zur Ermittlung des für den Menschen wahrnehmbaren Farbunterschieds ($\Delta E$) zwischen zwei jeweils durch Farbvektoren ($E_1$, $E_2$) vorgegebenen Farben,

   - wobei die beiden Farbvektoren ($E_1$, $E_2$) in Bezug auf einen vorgegebenen Farbraum (**R**) festgelegt werden,
   - wobei jede der Komponenten des jeweiligen Farbevektors ($E_1$, $E_2$) jeweils dem Helligkeitsmesswert eines Sensors (10, 11) für eine vorgegebene Wellenlänge oder einen vorgegebenen Wellenlängenbereich entspricht, **dadurch gekennzeichnet,**
   - **dass** der Farbabstand ($\Delta R$) im Farbraum (**R**) zwischen den beiden Farbvektoren ($E_1$, $E_2$) ermittelt wird,
   - ein Basisfarbvektor (B) durch einen der beiden Farbvektoren ($E_1$, $E_2$) oder durch Verknüpfung der beiden Farbvektoren ($E_1$, $E_2$) im Farbraum (**R**) festgelegt wird,
   - **dass** ein Multiplikator ($\Delta\hat{E}$) durch Auswahl aus einer Anzahl vorgegebener Multiplikatoren ($\Delta\hat{E}_1$, ..., $\Delta\hat{E}_n$) in Abhängigkeit vom Basisfarbvektor (B) ermittelt wird, indem

       - ein Quantisierungsraum (**Q**) umfassend eine Anzahl von Vektoren (q) vorgegeben ist,
       - eine Zuordnung (**Z**) für jeden Farbvektor (e) innerhalb des Farbraums (**R**) zu jeweils einem der Vektoren (q) im Quantisierungsraum (**Q**) vorgegeben ist, wobei alle auf denselben Vektor (q) abgebildeten Farbvektoren (e) des Quantisierungsraums (**Q**) jeweils innerhalb einer vorgegebenen Umgebung (u) liegen, und die Zuordnung (**Z**) benachbart liegende Umgebungen (u) von Farbvektoren (e) auf jeweils benachbart liegende Vektoren (q) im Quantisierungsraum (**Q**) abbildet,
       - jedem Vektor (q) innerhalb des Quantisierungsraums (**Q**) jeweils ein Multiplikatorwert ($\Delta\hat{E}(q)$) zugeordnet ist,
       - für den Basisfarbvektor (B) der ihm jeweils durch die Zuordnung (**Z**) zugeordnete Vektor (q) gesucht und ihm als Quantisierungsvektor (Q) zugeordnet wird, und
       - der dem jeweiligen Quantisierungsvektor (Q) zugeordnete Multiplikatorwert ($\Delta\hat{E}(Q)$) ermittelt und als Multiplikator ($\Delta\hat{E}$) herangezogen wird,

   - wobei der ausgewählte Multiplikator ($\Delta\hat{E}$) das Verhältnis des Abstands ($\Delta E_{lokal}$) von in den CIELAB-Farbraum (**C**) transformierten Farbvektoren zum Abstand dieser Farbvektoren im vorgegebenen Farbraum (**R**) innerhalb einer vorgegebenen Umgebung um den Basisfarbvektors (B) näherungsweise angibt, und
   - **dass** der wahrnehmbare Farbunterschied ($\Delta E$) oder die Farbtreue ($\Delta E$) als Produkt des Farbabstands ($\Delta R$) und des Multiplikators ($\Delta\hat{E}$) gemäß $\Delta E = \Delta R \cdot \Delta\hat{E}$ ermittelt wird.

2. Verfahren nach Anspruch 1, **dadurch gekennzeichnet, dass**

   a) einer der beiden Farbvektoren ($E_1$, $E_2$) als Soll-Farbvektor ($E_1$) vorgegeben wird und der jeweils andere der beiden Farbvektoren ($E_1$, $E_2$) als Ist-Farbvektor ($E_2$) der Farben durch Messung ermittelt wird,

       - wobei insbesondere der Soll-Farbvektor ($E_1$) im CIELAB-Farbraum (**C**) vorgegeben und in den Farbraum (**R**) zurücktransformiert wird, oder

   b) dass beide Farbvektoren ($E_1$, $E_2$) durch Messung ermittelt werden.

3. Verfahren nach Anspruch 1 oder 2, **dadurch gekennzeichnet, dass** die einzelnen Multiplikatorwerte ($\Delta\hat{E}(q)$) in einem Speicher (3) abgespeichert vorliegen, wobei für jeden einzelnen Vektor (q) des Quantisierungsraums (**Q**) jeweils ein Speicherbereich vorgesehen ist und der dem jeweiligen Basisvektor (B) zugeordnete Multiplikator ($\Delta\hat{E}$) vor seiner Multiplikation mit dem Abstand ($\Delta R$) aus dem Speicher (3) abgerufen wird.

4. Verfahren nach einem der vorangehenden Ansprüche, **dadurch gekennzeichnet, dass** der dem Basisfarbvektor (B) jeweils zugeordnete Quantisierungsvektors (Q) nach der folgenden Vorschrift ermittelt wird,

$$Q(B) = [B_1 \cdot floor(B_1/S_1) + floor(S_1/2), B_2 \cdot floor(B_2/S_2) + floor(S_2/2),$$

$$..., B_n \cdot floor(B_n/S_n) + floor(S_n/2)]$$

wobei $B_1$, $B_2$, ..., $B_n$ die einzelnen Komponenten des Basisfarbvektors (B) bezeichnen, und $S_1, S_2, ..., S_n$ die Quantisierungsintervalle für die einzelnen Farbkomponenten bezeichnen, die insbesondere im Bereich zwischen 2 bis 20, insbesondere auf 4, 8 oder 16 festgelegt werden.

5. Verfahren nach einem der vorangehenden Ansprüche, **dadurch gekennzeichnet, dass** für jeden Vektor (q) des Quantisierungsraums ($\underline{Q}$) jeweils ein in der Umgebung (u) der auf den Vektor (q) abgebildeten Farbvektoren (e) als Zentralvektor ($e_Z$) herangezogen wird, und dass innerhalb der Umgebung (u) oder innerhalb einer weiteren Umgebung (u) um den Zentralvektor ($e_Z$) eine Anzahl von Nachbarvektoren ($N_1(e_Z)$, ..., $N_n(e_Z)$) vorgegeben und dem Zentralvektor ($e_Z$) oder dem jeweiligen Vektor (q) des Quantisierungsraums ($\underline{Q}$) zugewiesen wird,

- dass für den Zentralvektor ($e_Z$) und jedem seiner ihm zugeordneten Nachbarvektoren ($N_1(e_Z)$, ..., $N_n(e_Z)$)

- der Zentralvektor ($e_Z$) sowie der jeweilige Nachbarvektor ($N_1(e_Z)$, ..., $N_n(e_Z)$) nach einer vorgegebenen Vorschrift (Y) in den CIELAB-Farbraum (C) transformiert werden,
- nach vorgegebenen Kriterien, insbesondere durch Bildung des euklidischen Abstands, zwischen den in den CIELAB-Farbraum ($\underline{C}$) transformierten Vektoren ($e_Z$, $N_1(e_Z)$, ..., $N_n(e_Z)$), jeweils ein Farbunterschied ($\Delta E_{lokal,1}$, $\Delta E_{lokal,2}$, ... $\Delta El_{okal,6}$) zwischen dem Zentralvektor und jeweils einem der Nachbarvektoren ermittelt wird, und
- der Farbunterschied ($\Delta E_{lokal,1}$, $\Delta E_{lokal,2}$, ... $\Delta E_{lokal,6}$) gegebenenfalls durch den Abstand ($De_1$, $De_2$, ... $De_6$) der Vektoren ($e_Z$, $N_1(e_Z)$, ..., $N_n(e_Z)$) im Farbraum ($\underline{R}$) dividiert wird,

- sodass für jeden Zentralvektor ($e_Z$) für jeden seiner Nachbarvektoren ($N_1(e_Z)$, ..., $N_n(e_Z)$) jeweils ein Farbunterschied ($\Delta E_{lokal}$) zur Verfügung steht, und
- dass für jeden einem Vektor (q) im Quantisierungsraum ($\underline{Q}$) zugeordneten Zentralvektor ($e_Z$) aus den ihm zugeordneten Farbunterschieden ($\Delta E_{lokal}$) zu seinen zugeordneten Nachbarvektoren ($N_1(e_Z)$, ..., $N_n(e_Z)$) der, insbesondere arithmetische, Mittelwert oder Median gebildet wird und dieser als Multiplikator $\Delta \hat{E}$ herangezogen und dem jeweiligen Vektor (q) zugeordnet wird.

6. Verfahren nach Anspruch 5, **dadurch gekennzeichnet, dass** innerhalb einer Umgebung (u) derjenige Vektor als Zentralvektor ($e_Z$) ausgewählt wird, der dem arithmetischen Mittelwert der Summe aller Vektoren aus der jeweiligen Umgebung (u) am nächsten liegt.

7. Verfahren nach Anspruch 5 oder 6, **dadurch gekennzeichnet, dass** als Nachbarvektoren ($N_1(e_Z)$, ..., $N_n(e_Z)$) eines Zentralvektors ($e_Z$) jeweils die Zentralvektoren von jeweils benachbarten Umgebungen (u) herangezogen werden.

8. Verfahren nach einem der vorangehenden Ansprüche, **dadurch gekennzeichnet, dass** der wahrnehmbare Farbunterschied ($\Delta E$) durch den Mittelwert oder den Median der Quantisierungsintervalle ($S_1$, $S_2$, ..., $S_n$) dividiert wird.

9. Verfahren nach einem der vorangehenden Ansprüche, **dadurch gekennzeichnet,**

- **dass** der Basisfarbvektor (B) aus einer vorgegebenen Umgebung (u) um die beiden Farbvektoren ($E_1$, $E_2$) gewählt wird,
- wobei der Basisfarbvektor (B) insbesondere dem arithmetischen Mittelwert zwischen dem ersten Farbvektor ($E_1$) und dem zweiten Farbvektor ($E_2$) gleichgesetzt wird.

10. Verfahren nach einem der vorangehenden Ansprüche, **dadurch gekennzeichnet,**

- **dass** die Differenz (dR) der Farbvektoren ($E_1$, $E_2$) durch Subtraktion der einzelnen Komponenten der beiden Farbvektoren ($E_1$, $E_2$) ermittelt wird
- **dass** die betragsmäßig größte Komponente der Differenz der Farbvektoren ($E_1$, $E_2$) als dominante Komponente ($E_d$) ermittelt wird und
- **dass** je ein Multiplikator ($\Delta \hat{E}$) durch Auswahl aus einer Anzahl vorgegebener Multiplikatoren ($\Delta \hat{E}_{1,r}$, $\Delta \hat{E}_{1,g}$, $\Delta \hat{E}_{1,b}$, ..., $\Delta \hat{E}_{n,r}$, $\Delta \hat{E}_{n,g}$, $\Delta \hat{E}_{n,b}$) in Abhängigkeit vom Basisfarbvektor (B) sowie von der dominanten Komponente ($E_d$) ermittelt wird,
- wobei der ausgewählte Multiplikator ($\Delta \hat{E}$) das Verhältnis des Abstands ($\Delta E_{lokal}$) von in den CIELAB-Farbraum ($\underline{C}$) transformierten Farbvektoren zum Abstand (De) dieser Farbvektoren ($E_1$, $E_2$) im vorgegebenen Farbraum ($\underline{R}$) innerhalb einer vorgegebenen Umgebung (u) des Basisfarbvektors (B) zwischen zwei Vektoren angibt, die sich in der dominanten Komponente ($E_d$) betragsmäßig stärker als in den übrigen Komponenten unterscheiden.

11. Verfahren nach Anspruch 10, **dadurch gekennzeichnet,**

- **dass** für jeden Vektor (q) des Quantisierungsraums ($\underline{Q}$) jeweils ein in der Umgebung (u) der auf den Vektor (q) abgebildeten Farbvektoren (e) als Zentralvektor ($e_Z$) herangezogen wird, und dass innerhalb der Umgebung oder innerhalb einer weiteren Umgebung um den Zentralvektor ($e_Z$) eine Anzahl von Nachbarvektoren ($N_1(e_Z)$, ..., $N_n(e_Z)$) vorgegeben wird,

- **dass** dem Zentralvektor ($e_Z$) und/oder dem jeweiligen Vektor (q) des Quantisierungsraums ($\underline{Q}$) Nachbarvektoren ($N_1(e_Z)$, ..., $N_n(e_Z)$) zugewiesen werden, wobei jeder der Nachbarvektoren ($N_1(e_Z)$, ..., $N_n(e_Z)$) jeweils in einer der Komponenten gegenüber dem Zentralvektor ($e_Z$) betragsmäßig stärker als in den übrigen Komponenten verschoben ist,

- **dass** zwischen dem Zentralvektor ($e_Z$) und denjenigen seiner ihm zugeordneten Nachbarvektoren ($N_1(e_Z)$, ..., $N_n(e_Z)$), die sich jeweils in einer der Komponenten vom dem Zentralvektor ($e_Z$) betragsmäßig stärker als in den übrigen Komponenten unterscheiden jeweils

- der Zentralvektor ($e_Z$) sowie der jeweilige Nachbarvektor ($N_1(e_Z)$, ..., $N_n(e_Z)$) nach einer vorgegebenen Vorschrift (Y) in den CIELAB-Farbraum ($\underline{C}$) transformiert werden,

- nach vorgegebenen Kriterien, insbesondere durch Bildung des euklidischen Abstands, zwischen den in den CIELAB-Farbraum ($\underline{C}$) transformierten Vektoren ($e_Z$, $N_1(e_Z)$, ..., $N_n(e_Z)$), ein Farbunterschied ($\Delta E_{lokal,1}$, $\Delta E_{lokal,2}$, $\Delta E_{lokal,3}$, $AE_{lokal,4}$) ermittelt wird, und

- der Farbunterschied ($\Delta E_{lokal,1}$, $\Delta E_{lokal,2}$, $\Delta E_{lokal,3}$, $\Delta E_{lokal,4}$) gegebenenfalls durch den Abstand ($De_1$, $De_2$, $De_3$, $De_4$) der Vektoren ($e_Z$, $N_1(e_Z)$, ..., $N_n(e_Z)$) im Farbraum ($\underline{R}$) dividiert wird,

- sodass für jeden Zentralvektor ($e_Z$) für jeden seiner Nachbarvektoren ($N_1(e_Z)$, ..., $N_n(e_Z)$) jeweils ein Farbunterschied ($\Delta E_{lokal}$) zur Verfügung steht, und

- **dass** für jeden einem Vektor (q) im Quantisierungsraum ($\underline{Q}$) zugeordneten Zentralvektor ($e_Z$) für jede einzelne Koordinatenrichtung (r, g, b) separat aus den dem Vektor (q) zugeordneten Farbunterschieden ($\Delta E_{lokal}$) zu seinen ihm zugeordneten Nachbarvektoren ($N_1(e_Z)$, ..., $N_n(e_Z)$) jeweils ein, insbesondere arithmetischer, Mittelwert oder Median gebildet wird dieser als Multiplikatorwert $\Delta \hat{E}$ herangezogen und dem jeweiligen Vektor (q) für die jeweilige Komponente ($e_Z$) zugeordnet wird.

12. Verfahren nach Anspruch 10 oder 11, **dadurch gekennzeichnet, dass** die einzelnen Multiplikatorwerte ($\Delta \hat{E}(q)$) in einem Speicher (3) abgespeichert vorliegen, wobei für jeden einzelnen Vektor (q) des Quantisierungsraums ($\underline{Q}$) jeweils separate Speicherbereiche für jede der Komponenten vorgesehen sind und der dem jeweiligen Basisvektor (B) zugeordnete Multiplikator ($\Delta \hat{E}$) vor seiner Multiplikation mit dem Abstand ($\Delta R$) in Abhängigkeit vom Vektor (q) sowie von der dominanten Komponente ($E_d$) aus dem Speicher abgerufen wird.

13. Vorrichtung zur Bestimmung der Farbtreue ($\Delta E$) und/oder zur Ermittlung des für den Menschen wahrnehmbaren Farbunterschieds ($\Delta E$) zwischen zwei jeweils durch Farbvektoren ($E_1$, $E_2$) vorgegebenen Farben, umfassend zumindest einen Farb-Helligkeitssensor (10), an dessen Ausgang ein Farbvektor ($E_1$, $E_2$) in einem Farbraum ($\underline{R}$) anliegt, **gekennzeichnet durch**

- eine dem Farb-Helligkeitssensor (10) nachgeschaltete Abstandsbildungseinheit (1), die den Farbabstand ($\Delta R$) im Farbraum ($\underline{R}$), insbesondere in Form des Euklidischen Abstands, zwischen den beiden Farbvektoren ($E_1$, $E_2$) ermittelt und an ihrem Ausgang zur Verfügung hält,

- eine dem Farb-Helligkeitssensor (10) nachgeschaltete Quantisierungseinheit (2), der die beiden Farbvektoren ($E_1$, $E_2$) zugeführt sind und die abhängig von einem der Farbvektoren ($E_1$, $E_2$) oder beiden Farbvektoren ($E_1$, $E_2$) jeweils einen Basisvektor (B) ermittelt und anschließend eine Umgebung (u) im Farbraum ($\underline{R}$) ermittelt, innerhalb der sich der Basisvektor (B) befindet und an ihrem Ausgang einen dieser Umgebung (u) zugeordneten Quantisierungsvektor (q) zur Verfügung hält,

- einen Multiplikatorspeicher (3), in dem für jeden Quantisierungsvektor (q) jeweils ein Multiplikatorwert ($\Delta \hat{E}(q)$), der das Verhältnis des Abstands ($\Delta E_{lokal}$) von in den CIELAB-Farbraum ($\underline{C}$) transformierten Farbvektoren zum Abstand dieser Farbvektoren ($E_1$, $E_2$) im vorgegebenen Farbraum ($\underline{R}$) innerhalb einer vorgegebenen Umgebung (u) des Basisfarbvektors (B) als Farbtreue ($\Delta E$) oder Farbunterschieds ($\Delta E$) angibt, wobei dem Multiplikatorspeicher (3) der von der Quantisierungseinheit (2) erstellte Quantisierungsvektor (q) zugeführt ist und am Ausgang des Multiplikatorspeichers (3) jeweils derjenige Multiplikatorwert abgespeichert vorliegt, der dem jeweiligen Quantisierungsvektor (q) zugeordnet ist, sowie

- eine Multiplikatoreinheit (4), die dem Multiplikationsspeicher (3) sowie der Abstandbildungseinheit (1) nachgeschaltet ist und an deren Ausgang das Produkt aus dem Multiplikatorwert ($\Delta \hat{E}(q)$) und dem Farbabstand ($\Delta R$) als für den Menschen wahrnehmbarer Farbunterschied ($\Delta E$) und/oder Farbtreue ($\Delta E$) anliegt.

14. Vorrichtung nach Anspruch 13, **gekennzeichnet durch** einen Sollwertspeicher, in dem der zweite Farbvektor ($E_2$) als Sollwert abgespeichert ist und der Abstandsbildungseinheit (1) und der Quantisierungseinheit (2) vorgeschaltet ist.

**15.** Vorrichtung nach Anspruch 14, **dadurch gekennzeichnet, dass**

- eine Einheit (5) zur Bildung der dominanten Komponente ($E_d$) vorgesehen ist, der die Farbvektoren ($E_1$, $E_2$) zugeführt sind, die eine vektorielle Differenz zwischen den beiden Farbvektoren ($E_1$, $E_2$) bildet und die Position der betragsmäßig größten Komponente der Differenz (dR) der Farbvektoren ($E_1$, $E_2$) an ihrem Ausgang zur Verfügung hält,
- der Multiplikatorspeicher (3) für jeden der Quantisierungsvektoren (q) jeweils so viele Multiplikatoren ($\Delta\hat{E}$) abgespeichert enthält, wie die Farbvektoren Komponenten aufweisen, wobei für jeden Quantisierungsvektor (q) und für jede Koordinatenrichtung (r, g, b) im Farbraum (**R**) jeweils ein Multiplikatorwert ($\Delta\hat{E}$) abgespeichert ist,
- für jeden einem Vektor (q) im Quantisierungsraum (**Q**) zugeordneten Zentralvektor ($e_Z$) für jede einzelne Koordinatenrichtung (r, g, b) separat aus den dem Vektor (q) zugeordneten Farbunterschieden ($\Delta E_{lokal}$) zu seinen ihm zugeordneten Nachbarvektoren ($N_1(e_Z)$, ..., $N_n(e_Z)$) jeweils ein, insbesondere arithmetischer, Mittelwert oder Median abgespeichert vorliegt, und
- der Ausgang der Einheit (5) zur Bildung der dominanten Komponente ($E_d$) dem Multiplikatorspeicher (3) zugeführt ist, wobei am Ausgang des Multiplikatorspeichers (3) jeweils derjenige Multiplikator ($\Delta\hat{E}$) anliegt, der jeweils dem von der Quantisierungseinheit (2) gebildeten Quantisierungsvektor (q) und der von der Einheit (5) abgegebenen dominanten Komponente ($E_d$) zugeordnet ist.

**Claims**

**1.** A method for determining the colour fidelity ($\Delta E$) and/or for ascertaining the perceivable colour difference ($\Delta E$) for humans between two colours predetermined by colour vectors ($E_1$, $E_2$),

- the two colour vectors ($E_1$, $E_2$) being defined with respect to a predetermined colour space (**R**),
- each of the components of the respective colour vector ($E_1$, $E_2$) corresponding in each case to the brightness measurement value of a sensor (10, 11) for a predetermined wavelength or a predetermined wavelength range, **characterised in that,**
- the colour deviation ($\Delta R$) is ascertained in the colour space (**R**) between the two colour vectors ($E_1$, $E_2$),
- a base colour vector (B) is defined by one of the two colour vectors ($E_1$, $E_2$) or by linking the two colour vectors ($E_1$, $E_2$) in the colour space (**R**),
- **in that** a multiplier ($\Delta\hat{E}$) is ascertained by selection from a number of predetermined multipliers ($\Delta\hat{E}_1$, ..., $\Delta\hat{E}_n$) as a function of the base colour vector (B), **in that**

- a quantisation space (**Q**) comprising a number of vectors (q) is predetermined,
- an assignment (**Z**) for each colour vector (e) within the colour space (**R**) to one of the vectors (q) in the quantisation space (**Q**) is predetermined, all the colour vectors (e) of the quantisation space (**Q**) mapped onto the same vector (q) each being within a predetermined environment (u), and the assignment (**Z**) mapping adjacent environments (u) of colour vectors (e) onto respective adjacent vectors (q) in the quantisation space (**Q**),
- each vector (q) within the quantisation space (**Q**) is respectively assigned a multiplier value ($\Delta\hat{E}(q)$),
- for the base colour vector (B), the vector (q) assigned thereto in each case by the assignment (**Z**) is searched for and assigned thereto as the quantisation vector (Q), and
- the multiplier value ($\Delta\hat{E}(Q)$) assigned to the respective quantisation vector (Q) is ascertained and used as a multiplier ($\Delta\hat{E}$),

- the selected multiplier ($\Delta\hat{E}$) approximating the ratio of the distance ($\Delta E_{local}$) of colour vectors transformed into the CIELAB colour space (**C**) to the distance of these colour vectors in the predetermined colour space (**R**) within a predetermined environment around the base colour vector (B), and
- **in that** the perceivable colour difference ($\Delta E$) or the colour fidelity ($\Delta E$) is ascertained as the product of the colour deviation ($\Delta R$) and the multiplier ($\Delta\hat{E}$) according to $\Delta E = \Delta R \cdot \Delta\hat{E}$.

**2.** The method according to claim 1, **characterised in that**

a) one of the two colour vectors ($E_1$, $E_2$) is specified as the desired colour vector ($E_1$) and the other of the two colour vectors ($E_1$, $E_2$) is ascertained as the actual colour vector ($E_2$) of the colours by measurement,

- the desired colour vector ($E_1$) in particular being predetermined in the CIELAB colour space ($\underline{C}$) and transformed back into the colour space ($\underline{R}$), or

b) **in that** both colour vectors ($E_1$, $E_2$) are ascertained by measurement.

3. The method according to claim 1 or 2, **characterised in that** the individual multiplier values ($\Delta\hat{E}(q)$) are stored in a memory (3), a respective memory region being provided for each individual vector (q) of the quantisation space ($\underline{Q}$) and the multiplier ($\Delta\hat{E}$) assigned to the respective base vector (B) being retrieved from the memory (3) before its multiplication by the distance ($\Delta R$).

4. The method according to any one of the preceding claims, **characterised in that** the quantisation vector (Q) assigned in each case to the base colour vector (B) is ascertained according to the following rule,

$$Q(B) = [B_1 \cdot floor(B_1/S_1) + floor(S_1/2), B_2 \cdot floor(B_2/S_2) + floor(S_2/2), ..., B_n \cdot floor(B_n/S_n) + floor(S_n/2)]$$

where $B_1$, $B_2$, ..., $B_n$ denote the individual components of the base colour vector (B), and $S_1$, $S_2$, ..., $S_n$ denote the quantisation intervals for the individual colour components, in particular in the range between 2 and 20, in particular being defined at 4, 8 or 16.

5. The method according to any one of the preceding claims, **characterised in that**, for each vector (q) of the quantisation space ($\underline{Q}$), one is used in each case as the central vector ($e_Z$) in the environment (u) of the colour vectors (e) mapped onto the vector (q), and **in that** within the environment (u) or within a further environment (u) around the central vector ($e_Z$) a number of neighbouring vectors ($N_1(e_Z)$, ..., $N_n(e_Z)$) are predetermined and allocated to either the central vector ($e_Z$) or the respective vector (q) of the quantisation space ($\underline{Q}$),

- **in that** for the central vector ($e_Z$) and each of its assigned neighbouring vectors ($N_1(e_Z)$, ..., $N_n(e_Z)$)

- the central vector ($e_Z$) and the respective neighbouring vector ($N_1(e_Z)$, ..., $N_n(e_Z)$) are transformed into the CIELAB colour space ($\underline{C}$) according to a predetermined rule (Y),
- a colour difference ($\Delta E_{local, 1}$, $\Delta E_{local, 2}$, ... $\Delta E_{local, 6}$) between the central vector and one of the neighbouring vectors in each case is ascertained according to predetermined criteria, in particular by formation of the Euclidean distance, between the vectors ($e_Z$, $N_1(e_Z)$, ..., $N_n(e_Z)$) transformed into the CIELAB colour space ($\underline{C}$), and
- the colour difference ($\Delta E_{local, 1}$, $\Delta E_{local, 2}$, ... $\Delta E_{local, 6}$) is optionally divided by the distance ($De_1$, $De_2$, ... $De_6$) of the vectors ($e_Z$, $N_1(e_Z)$, ..., $N_n(e_Z)$) in the colour space (R),

- so that one colour difference ($\Delta E_{local}$) is available for each central vector ($e_Z$) for each of the neighbouring vectors ($N_1(e_Z)$, ..., $N_n(e_Z)$) thereof, and
- for each central vector ($e_Z$) assigned to a vector (q) in the quantisation space (Q), the, in particular arithmetic, mean or median is formed out of its assigned colour differences ($\Delta E_{local}$) to its assigned neighbouring vectors ($N_1(e_Z)$, ..., $N_n(e_Z)$), and is used as a multiplier $\Delta\hat{E}$ and assigned to the respective vector (q).

6. The method according to claim 5, **characterised in that**, within an environment (u), the vector which is closest to the arithmetic mean of the sum of all the vectors from the respective environment (u) is selected as the central vector ($e_Z$).

7. The method according to claim 5 or 6, **characterised in that** in each case the central vectors of respective adjacent neighbourhoods (u) are used as the neighbouring vectors ($N_1(e_Z)$, ..., $N_n(e_Z)$) of a central vector ($e_Z$).

8. The method according to any one of the preceding claims, **characterised in that** the perceptible colour difference ($\Delta E$) is divided by the mean or the median of the quantisation intervals ($S_1$, $S_2$, ..., $S_n$).

9. The method according to any one of the preceding claims, **characterised in that**

- the basic colour vector (B) is selected from a predetermined environment (u) around the two colour vectors ($E_1$, $E_2$),

- the base colour vector (B) being equated in particular with the arithmetic mean between the first colour vector ($E_1$) and the second colour vector ($E_2$).

**10.** The method according to any one of the preceding claims, **characterised in that**

- the difference (dR) of the colour vectors ($E_1$, $E_2$) is ascertained by subtraction of the individual components of the two colour vectors ($E_1$, $E_2$),
- **in that** the largest component, in terms of magnitude, of the difference of the colour vectors ($E_1$, $E_2$) is ascertained as the dominant component ($E_d$), and
- **in that** each multiplier ($\Delta\hat{E}$) is ascertained by selecting from a number of predetermined multipliers ($\Delta\hat{E}_{1,r}$, $\Delta\hat{E}_{1,g}$, $\Delta\hat{E}_{1,b}$, ..., $\Delta\hat{E}_{n,r}$, $\Delta\hat{E}_{n,g}$, $A\hat{E}_{n,b}$) as a function of the basic colour vector (B) and from the dominant component ($E_d$),
- the selected multiplier ($\Delta\hat{E}$) indicating the ratio of the distance ($\Delta E_{local}$) of colour vectors transformed into the CIELAB colour space (**C**) to the distance (De) of these colour vectors ($E_1$, $E_2$) in the predetermined colour space (**R**) within a predetermined environment (u) of the base colour vector (B) between two vectors which differ in magnitude more in the dominant component ($E_d$) than in the other components.

**11.** The method according to claim 10, **characterised in that**

- for each vector (q) of the quantisation space (**Q**), one is used in each case as the central vector ($e_Z$) in the environment (u) of the colour vectors (e) mapped onto the vector (q), and **in that** within the environment or within a further environment around the central vector ($e_Z$) a number of neighbouring vectors ($N_1(e_Z)$, ..., $N_n(e_Z)$) are predetermined,
- **in that** neighbouring vectors ($N_1(e_Z)$, ..., $N_n(e_Z)$) are allocated to the central vector ($e_Z$) and/or to the respective vector (q) of the quantisation space (**Q**), each of the neighbouring vectors ($N_1(e_Z)$, ..., $N_n(e_Z)$) in one of the components in each case being shifted with respect to the central vector ($e_Z$) by a greater amount than in the other components,
- **in that** between the central vector ($e_Z$) and those of its assigned neighbouring vectors ($N_1(e_Z)$, ..., $N_n(e_Z)$), which each differ in terms of magnitude by a greater amount in one of the components of the central vector ($e_Z$) than in the other components,
- the central vector ($e_Z$) and the respective neighbouring vector ($N_1(e_Z)$, ..., $N_n(e_Z)$) are transformed into the CIELAB colour space (**C**) according to a predetermined rule (Y),
- a colour difference ($\Delta E_{local,\,1}$, $\Delta E_{local,\,2}$, $\Delta E_{local,\,3}$, $\Delta E_{local,\,4}$) is ascertained according to predetermined criteria, in particular by formation of the Euclidean distance between the vectors ($e_Z$, $N_1(e_Z)$, ..., $Nn(e_Z)$) transformed into the CIELAB colour space (**C**), and
- the colour difference ($\Delta E_{local,\,1}$, $\Delta E_{local,\,2}$, $\Delta E_{local,\,3}$, $\Delta E_{local,\,4}$) is optionally divided by the distance ($De_1$, $De_2$, $De_3$, $De_4$) of the vectors ($e_Z$, $N_1(e_Z)$, ..., $N_n(e_Z)$) in the colour space (**R**),
- so that one colour difference ($AE_{local}$) is available for each central vector ($e_Z$) for each of the neighbouring vectors ($N_1(e_Z)$, ..., $N_n(e_Z)$) thereof, and
- an, in particular arithmetic, mean or median is formed for each central vector ($e_Z$) assigned to a vector (q) in the quantisation space (**Q**) separately for each individual coordinate direction (r, g, b) out of the colour differences ($\Delta E_{local}$), assigned to the vector (q), to its assigned neighbouring vectors ($N_1(e_Z)$, ..., $N_n(e_Z)$), and is used as a multiplier value $\Delta\hat{E}$ and assigned to the respective vector (q) for the particular component ($e_Z$).

**12.** The method according to claim 10 or 11, **characterised in that** the individual multiplier values ($\Delta\hat{E}(q)$) are stored in a memory (3), separate memory regions for each of the components being provided for each individual vector (q) of the quantisation space (**Q**) and the multiplier ($\Delta\hat{E}$) assigned to the respective base vector (B) being retrieved from the memory before its multiplication by the distance (AR), depending on the vector (q) and the dominant component ($E_d$).

**13.** A device for determining colour fidelity ($\Delta E$) and/or for ascertaining the perceivable colour difference ($\Delta E$) for humans between two colours each predetermined by colour vectors ($E_1$, $E_2$), comprising at least one colour brightness sensor (10), at the output of which a colour vector ($E_1$, $E_2$) is applied in a colour space (**R**), **characterised by**

- a distance-forming unit (1) which is arranged downstream of the colour-brightness sensor (10) and ascertains the colour deviation ($\Delta R$) in the colour space (**R**), in particular in the form of the Euclidean distance, between the two colour vectors ($E_1$, $E_2$) and makes it available at its output,

- a quantisation unit (2) which is downstream of the colour-brightness sensor (10), to which the two colour vectors ($E_1$, $E_2$) are supplied and which ascertains a base vector (B) depending on one of the colour vectors ($E_1$, $E_2$) or both colour vectors ($E_1$, $E_2$) and then ascertains an environment (u) in the colour space ($\underline{R}$) within which the base vector (B) is located, and makes a quantisation vector (q) assigned to that environment (u) available at its output,

- a multiplier memory (3), in which, for each quantisation vector (q), in each case a multiplier value ($\Delta\hat{E}(q)$) is stored, which indicates the ratio of the distance ($\Delta E_{local}$) of the colour vectors transformed into the CIELAB colour space ($\underline{C}$) to the distance of these colour vectors ($E_1$, $E_2$) in the predetermined colour space ($\underline{R}$) within a predetermined environment (u) of the base colour vector (B) as colour fidelity ($\Delta E$) or colour difference ($\Delta E$), the quantisation vector (q) created by the quantisation unit (2) being supplied to the multiplier memory (3) and the multiplier value assigned to the respective quantisation vector (q) being available in stored form at the output of the multiplier memory (3), and

- a multiplier unit (4) which is connected downstream of the multiplication memory (3) and of the distance-forming unit (1) and at the output of which the product of the multiplier value ($\Delta\hat{E}(q)$) and the colour deviation ($\Delta R$) is applied as the colour difference ($\Delta E$) that is perceptible to humans and/or colour fidelity ($\Delta E$).

14. The device according to claim 13, **characterised by** a set point memory, in which the second colour vector ($E_2$) is stored as a set point and which is connected upstream of the distance-forming unit (1) and the quantisation unit (2).

15. The device according to claim 14, **characterised in that**

- a unit (5) is provided for forming the dominant component ($E_d$), to which the colour vectors ($E_1$, $E_2$) are supplied and which forms a vectorial difference between the two colour vectors ($E_1$, $E_2$) and makes the position of the largest component, in terms of magnitude, of the difference (dR) of the colour vectors ($E_1$, $E_2$) available at its output,

- the multiplier memory (3) for each of the quantisation vectors (q) contains as many multipliers ($\Delta\hat{E}$) as the colour vectors have components, a multiplier value ($\Delta\hat{E}$) being stored for each quantisation vector (q) and for each coordinate direction (r, g, b) in the colour space ($\underline{R}$) in each case,

- an, in particular arithmetic, mean or median is present in stored form for each central vector ($e_Z$) assigned to a vector (q) in the quantisation space ($\underline{Q}$) separately for each individual coordinate direction (r, g, b) out of the colour differences ($\Delta E_{local}$), assigned to the vector (q), to its assigned neighbouring vectors ($N_1(e_Z)$, ..., $N_n(e_Z)$), and

- the output of the unit (5) for forming the dominant component ($E_d$) is supplied to the multiplier memory (3), the multiplier ($\Delta\hat{E}$) assigned in each case to the quantisation vector (q) formed by the quantisation unit (2) and to the dominant component ($E_d$) output by the unit (5) being applied at the output of the multiplier memory (3) in each case.

## Revendications

1. Procédé de vérification de la fidélité des couleurs ($\Delta E$) et/ou de détermination de la différence de couleur ($\Delta E$) perceptible par l'homme entre deux couleurs définies respectivement par des vecteurs de couleur ($E_1$, $E_2$),

- dans lequel les deux vecteurs de couleur ($E_1$, $E_2$) sont définis par rapport à un espace de couleur prédéfini ($\underline{R}$),
- dans lequel chacune des composantes du vecteur de couleur respectif ($E_1$, $E_2$) correspond respectivement à la valeur de mesure de luminosité d'un capteur (10, 11) pour une longueur d'onde prédéfinie ou une gamme de longueurs d'onde définie, **caractérisé en ce que**
- la différence de couleur ($\Delta R$) est déterminée dans l'espace de couleur ($\underline{R}$) entre les deux vecteurs de couleur ($E_1$, $E_2$),
- un vecteur de couleur de base (B) est défini par l'un des deux vecteurs de couleur ($E_1$, $E_2$) ou par liaison des deux vecteurs de couleur ($E_1$, $E_2$) dans l'espace de couleurs ($\underline{R}$),
- **en ce qu'**un multiplicateur ($\Delta\hat{E}$) est déterminé par sélection parmi un certain nombre de multiplicateurs prédéfinis ($\Delta\hat{E}_1$, ..., $\Delta\hat{E}_n$) en fonction du vecteur de couleur de base (B), **en ce**

    - **qu'**un espace de quantification ($\underline{Q}$) comprenant un nombre de vecteurs (q) est défini,
    - une attribution ($\underline{Z}$) pour chaque vecteur de couleur (e) dans l'espace de couleur ($\underline{R}$) à l'un des vecteurs (q) dans l'espace de quantification ($\underline{Q}$) est définie, tous les vecteurs de couleur (e) formés sur le même vecteur (q) de l'espace de quantification ($\underline{Q}$) étant chacun dans un environnement donné (u) et l'attribution (**Z**) forme des environnements adjacents (u) de vecteurs de couleur (e) sur respectivement des vecteurs adjacents (q) dans l'espace de quantification (**Q**),
- une valeur de multiplicateur ($\Delta\hat{E}(q)$) est associée à chaque vecteur (q) dans l'espace de quantification (**Q**),
- pour le vecteur de couleur de base (B), le vecteur (q) qui lui est attribué respectivement par l'attribution (**Z**) est recherché et lui est affecté en tant que vecteur de quantification (Q) et
- la valeur de multiplicateur ($\Delta\hat{E}(Q)$) attribuée au vecteur de quantification respectif (Q) est déterminée et utilisée comme multiplicateur ($\Delta\hat{E}$),

- le multiplicateur sélectionné ($\Delta\hat{E}$) se rapprochant du rapport de la distance ($\Delta E_{locale}$) des vecteurs de couleur transformés dans l'espace de couleur CIELAB (**C**) à la distance de ces vecteurs de couleur dans l'espace de couleur défini (**R**) dans un environnement défini autour du vecteur de couleur de base (B) et
- **en ce que** la différence de couleur perceptible ($\Delta E$) ou la fidélité des couleurs ($\Delta E$) est déterminée en tant que produit de la différence de couleur ($\Delta R$) et du multiplicateur ($\Delta\hat{E}$) conformément à $\Delta E = \Delta R \cdot \Delta\hat{E}$.

2. Procédé selon la revendication 1, **caractérisé en ce que**

a) l'un des deux vecteurs de couleur ($E_1$, $E_2$) est défini en tant que vecteur de couleur théorique ($E_1$) et l'autre des deux vecteurs de couleur ($E_1$, $E_2$) est déterminé en tant que vecteur de couleur réel ($E_2$) des couleurs par mesure,

- ,en particulier, le vecteur de couleur de consigne ($E_1$) étant prédéfini dans l'espace de couleur CIELAB (**C**) et reconverti dans l'espace de couleur (**R**) ou

b) **en ce que** les deux vecteurs de couleur ($E_1$, $E_2$) sont déterminés par mesure.

3. Procédé selon la revendication 1 ou 2, **caractérisé en ce que** les valeurs de multiplicateur individuelles ($\Delta\hat{E}(q)$) sont mémorisées dans une mémoire (3) chaque vecteur individuel (q) de l'espace de quantification (**Q**), étant placé respectivement dans une zone de mémoire et le multiplicateur ($\Delta\hat{E}$) attribué au vecteur de base respectif (B) étant extrait de la mémoire (3) avant sa multiplication par la distance ($\Delta R$).

4. Procédé selon l'une des revendications précédentes, **caractérisé en ce que** le vecteur de quantification (Q) attribué au vecteur de couleur de base respectif (B) est déterminé selon la règle suivante.

$$Q(B) = [B_1 \cdot \text{floor}(B_1/S_1) + \text{floor}(S_1/2), B_2 \cdot \text{floor}(B_2/S_2) + \text{floor}(S_2/2), \dots, B_n \cdot \text{floor}(B_n/S_n) + \text{floor}(S_n/2)]$$

$B_1, B_2, ..., B_n$ désignant les composantes individuelles du vecteur de couleur de base (B) et $S_1, S_2, ..., S_n$ désignant les intervalles de quantification pour les composantes de couleur individuelles, qui sont en particulier définies dans la plage de 2 à 20, en particulier à 4, 8 ou 16.

5. Procédé selon l'une des revendications précédentes, **caractérisé en ce que**, pour chaque vecteur (q) de l'espace de quantification (**Q**), un vecteur de couleur (e) formé dans l'environnement (u) du vecteur (q) est utilisé comme vecteur central ($e_Z$) et **en ce que** dans l'environnement (u) ou dans un autre environnement (u) autour du vecteur central ($e_Z$), un certain nombre de vecteurs voisins ($N_1(e_Z), ..., N_n(e_Z)$) sont définis et attribués au vecteur central ($e_Z$) ou au vecteur respectif (q) de l'espace de quantification (**Q**),

- **en ce que**, pour le vecteur central ($e_Z$) et pour chacun de ses vecteurs voisins associés ($N_1(e_Z), ..., N_n(e_Z)$)

- le vecteur central ($e_Z$) et le vecteur voisin respectif ($N_1(e_Z), ..., N_n(e_Z)$) sont transformés dans l'espace de couleur CIELAB (**C**) conformément à une règle prédéfinie (Y),
- selon des critères prédéterminés, en particulier par la formation de la distance euclidienne entre les vecteurs ($e_Z, N_1(e_Z), ..., N_n(e_Z)$) transformés dans l'espace de couleur CIELAB (**C**), respectivement, une différence de couleur ($\Delta E_{locale,\,1}, \Delta E_{locale,\,2}, ... \Delta E_{locale,\,6}$) est déterminée entre le vecteur central et respectivement l'un des vecteurs voisins, et
- la différence de couleur ($\Delta E_{locale,\,1}, \Delta E_{locale,\,2}, ... \Delta E_{locale,\,6}$) est éventuellement divisée par la distance ($De_1, De_2, ... De_6$) des vecteurs ($e_Z, N_1(e_Z), ..., N_n(e_Z)$) dans l'espace de couleur (**R**),

- de sorte que pour chaque vecteur central ($e_Z$) pour chacun de ses vecteurs voisins ($N_1(e_Z)$, ..., $N_n(e_Z)$), une différence de couleur ($\Delta E_{locale}$) soit disponible, et
- que pour chaque vecteur central ($e_Z$) attribué à un vecteur ($q$) dans l'espace de quantification ($\underline{\mathbf{Q}}$) à partir de ses différences de couleur associées ($\Delta E_{locale}$) par rapport à ses vecteurs voisins associés ($N_1(e_Z)$, ..., $N_n(e_Z)$), la moyenne en particulier arithmétique ou médiane soit formée et soit utilisée comme multiplicateur $\Delta \hat{E}$ et attribuée au vecteur respectif ($q$).

6. Procédé selon la revendication 5, **caractérisé en ce que**, dans un environnement ($u$), le vecteur le plus proche de la moyenne arithmétique de la somme de tous les vecteurs de l'environnement ($u$) respectif est sélectionné en tant que vecteur central ($e_Z$).

7. Procédé selon la revendication 5 ou 6, **caractérisé en ce que** sont utilisés comme vecteurs voisins ($N_1(e_Z)$, ..., $N_n(e_Z)$) d'un vecteur central ($e_Z$) respectivement les vecteurs centraux de chaque environnement adjacent ($u$).

8. Procédé selon l'une des revendications précédentes, **caractérisé en ce que** la différence de couleur perceptible ($\Delta E$) est divisée par la moyenne ou la médiane des intervalles de quantification ($S_1$, $S_2$, ..., $S_n$).

9. Procédé selon une des revendications précédentes, **caractérisé**

- **en ce que** le vecteur de couleur de base ($B$) est sélectionné dans un environnement prédéfini ($u$) autour des deux vecteurs de couleur ($E_1$, $E_2$),
- le vecteur de couleur de base ($B$) est fixé égal notamment à la moyenne arithmétique entre le premier vecteur de couleur ($E_1$) et le second vecteur de couleur ($E_2$).

10. Procédé selon une des revendications précédentes, **caractérisé**

- **en ce que** la différence ($dR$) des vecteurs de couleur ($E_1$, $E_2$) est déterminée par soustraction des composantes individuelles des deux vecteurs de couleur ($E_1$, $E_2$)
- **en ce que** la composante la plus importante en termes de quantité de la différence des vecteurs de couleur ($E_1$, $E_2$) est déterminée en tant que composante dominante ($E_d$) et
- **en ce que** chaque multiplicateur ($\Delta \hat{E}$) est déterminé par sélection parmi un certain nombre de multiplicateurs prédéfinis ($\Delta \hat{E}_{1,r}$, $\Delta \hat{E}_{1,g}$, $\Delta \hat{E}_{1,b}$, ..., $A\hat{E}_{n,r}$, $\Delta \hat{E}_{n,g}$, $A\hat{E}_{n,b}$) en fonction du vecteur de couleur de base ($B$) et de la composante dominante ($E_d$),
- le multiplicateur sélectionné ($\Delta \hat{E}$) spécifiant le rapport entre la distance ($\Delta E_{locale}$) des vecteurs de couleur transformés dans l'espace de couleurs CIELAB ($\underline{\mathbf{C}}$) et la distance ($De$) de ces vecteurs de couleur ($E_1$, $E_2$) dans l'espace de couleurs prédéfini ($\underline{\mathbf{R}}$) dans un environnement prédéfini ($u$) du vecteur de couleur de base ($B$) entre deux vecteurs, dont la quantité diffère davantage dans la composante dominante ($E_d$) que dans les autres composantes.

11. Procédé selon la revendication 10, **caractérisé en ce**

- **que**, pour chaque vecteur ($q$) de l'espace de quantification ($\underline{\mathbf{Q}}$), un vecteur de couleur ($e$) formé dans l'environnement ($u$) du vecteur ($q$) est utilisé comme vecteur central ($e_Z$) et en ce que dans l'environnement ou dans un autre environnement autour du vecteur central ($e_Z$), un certain nombre de vecteurs voisins ($N_1(e_Z)$, ..., $N_n(e_Z)$) sont définis,
- en ce que des vecteurs voisins ($N_1(e_Z)$, ..., $N_n(e_Z)$) sont attribués au vecteur central ($e_Z$) et/ou au vecteur respectif ($q$) de l'espace de quantification ($\underline{\mathbf{Q}}$), chacun des vecteurs voisins ($N_1(e_Z)$, ..., $N_n(e_Z)$) étant décalé dans l'une des composantes par rapport au vecteur central ($e_Z$) d'une quantité plus importante que dans les autres composantes,
- en ce que, entre le vecteur central ($e_Z$) et ceux de ses vecteurs voisins associés ($N_1(e_Z)$, ..., $N_n(e_Z)$), qui diffèrent en termes de quantité davantage dans une des composantes du vecteur central ($e_Z$) que dans les autres composantes
- le vecteur central ($e_Z$) et le vecteur voisin respectif ($N_1(e_Z)$, ..., $N_n(e_Z)$) sont transformés respectivement dans l'espace de couleur CIELAB ($\underline{\mathbf{C}}$) conformément à une règle prédéfinie ($Y$),
- selon des critères donnés, en particulier par la formation de la distance euclidienne, entre les vecteurs ($e_Z$, $N_1(e_Z)$, ..., $Nn(e_Z)$) transformés dans l'espace de couleur CIELAB ($\underline{\mathbf{C}}$), une différence de couleur ($\Delta E_{locale, 1}$, $\Delta E_{locale, 2}$, $\Delta E_{locale, 3}$, $\Delta E_{locale, 4}$) est déterminée, et
- la différence de couleur ($\Delta E_{locale, 1}$, $\Delta E_{locale, 2}$, $\Delta E_{locale, 3}$, $\Delta E_{locale, 4}$) est éventuellement divisée par la distance

($De_1$, $De_2$, $De_3$, $De_4$) des vecteurs ($e_Z$, $N_1(e_Z)$, ..., $N_n(e_Z)$) dans l'espace de couleur ($\underline{R}$),
- de sorte que pour chaque vecteur central ($e_Z$) pour chacun de ses vecteurs voisins ($N_1(e_Z)$, ..., $N_n(e_Z)$), une différence de couleur ($\Delta E_{locale}$) soit disponible, et
- **que** pour chaque vecteur central (ez) attribué à un vecteur (q) dans l'espace de quantification ($\underline{Q}$) pour chaque axe de coordonnées individuel (r, g, b) séparément à partir de ses différences de couleur associées ($\Delta E_{locale}$) au vecteur (q) par rapport à ses vecteurs voisins associés ($N_1(e_Z)$, ..., $N_n(e_Z)$), une moyenne en particulier arithmétique ou médiane soit formée et soit utilisée comme valeur de multiplicateur $\Delta\hat{E}$ et attribuée au vecteur respectif (q) pour la composante respective ($e_Z$).

12. Procédé selon la revendication 10 ou 11, **caractérisé en ce que** les valeurs de multiplicateur individuelles ($\Delta\hat{E}(q)$) sont mémorisées dans une mémoire (3), chaque vecteur individuel (q) de l'espace de quantification ($\underline{Q}$) étant placé dans des zones de mémoire séparées pour chacune des composantes et le multiplicateur ($\Delta\hat{E}$) attribué au vecteur de base (B) respectif est extrait de la mémoire avant sa multiplication avec la distance ($\Delta R$) en fonction du vecteur (q), ainsi que de la composante dominante ($E_d$).

13. Dispositif pour la détermination de la fidélité des couleurs ($\Delta E$) et/ou pour la détermination de la différence de couleur perceptible par l'homme ($\Delta E$) entre deux couleurs prédéfinies respectivement par des vecteurs de couleurs ($E_1$, $E_2$) comprenant au moins un capteur de luminosité de couleur (10) à la sortie duquel un vecteur de couleur ($E_1$, $E_2$) est situé dans un espace de couleur ($\underline{R}$),
**caractérisé par**

- une unité de formation de distance (1) disposée en aval du capteur de luminosité de couleur (10), qui détermine la différence de couleur ($\Delta R$) dans l'espace de couleur ($\underline{R}$), en particulier sous la forme de la distance euclidienne, entre les deux vecteurs couleur ($E_1$, $E_2$) et la tient disponible à sa sortie,
- un capteur de quantification (2) disposé en aval du capteur de luminosité de couleur (10) dans lequel sont introduits les deux vecteurs couleur ($E_1$, $E_2$) et qui détermine en fonction d'un des vecteurs de couleur ($E_1$, $E_2$) ou des deux vecteurs de couleur ($E_1$, $E_2$) un vecteur de base (B) puis détermine un environnement (u) dans l'espace de couleur ($\underline{R}$), dans lequel se trouve le vecteur de base (B) et tient disponible à sa sortie un vecteur de quantification (q) attribué à cet environnement (u),
- une mémoire de multiplicateur (3) dans laquelle, pour chaque vecteur de quantification (q), une valeur de multiplicateur ($\Delta\hat{E}(q)$) respective, qui indique le rapport de la distance ($\Delta E_{locale}$) des vecteurs de couleur transformés dans l'espace de couleurs CIELAB ($\underline{C}$) à la distance de ces vecteurs de couleur ($E_1$, $E_2$) dans l'espace de couleur défini ($\underline{R}$) dans un environnement défini (u) du vecteur de couleur de base (B) en tant que fidélité des couleur ($\Delta E$) ou différence de couleur ($\Delta E$), le vecteur de quantification (q) créé par l'unité de quantification (2) étant introduit dans la mémoire de multiplicateurs (3) et, à la sortie de la mémoire de multiplicateurs (3), la valeur de multiplicateur qui est attribuée au vecteur de quantification respectif (q) est mémorisée et
- une unité de multiplication (4) en aval de la mémoire de multiplication (3) et de l'unité de formation de distance (1) et fournit à sa sortie le produit de la valeur de multiplicateur ($\Delta\hat{E}(q)$) et de la différence de couleur ($\Delta R$) en tant que différence de couleur ($\Delta E$) perceptible par l'homme et/ou la fidélité des couleurs ($\Delta E$).

14. Dispositif selon la revendication 13, **caractérisé par** une mémoire de valeurs théoriques , dans laquelle le second vecteur de couleur ($E_2$) est mémorisé en tant que valeur théorique et qui est disposée en amont de l'unité de formation de distance (1) et de l'unité de quantification (2).

15. Dispositif selon la revendication 14, **caractérisé en ce qu'**

- une unité (5) pour former la composante dominante ($E_d$) dans laquelle sont introduits les vecteurs de couleur ($E_1$, $E_2$), forme une différence vectorielle entre les deux vecteurs de couleur ($E_1$, $E_2$) et tient disponible à sa sortie la position de la plus grande composante en termes de quantité de la différence (dR) des vecteurs de couleur ($E_1$, $E_2$),
- la mémoire de multiplicateurs (3) pour chacun des vecteurs de quantification (q) mémorise autant de multiplicateurs ($\Delta\hat{E}$) que les vecteurs de couleurs ont de composantes, pour chaque vecteur de quantification (q) et pour chaque axe de coordonnées (r, g, b) dans l'espace de couleurs ($\underline{R}$) respectivement une valeur de multiplicateur ($\Delta\hat{E}$) étant mémorisée,
- pour chaque vecteur central (ez) attribué à un vecteur (q) dans l'espace de quantification ($\underline{Q}$) pour chaque axe de coordonnées individuel (r, g, b) séparément à partir des différences de couleur associées ($\Delta E_{locale}$) au vecteur (q) par rapport à ses vecteurs voisins associés ($N_1(e_Z)$, ..., $N_n(e_Z)$), une moyenne en particulier arithmétique ou une médiane est mémorisée, et

- la sortie de l'unité (5) destinée à former la composante dominante ($E_d$) est introduite dans la mémoire de multiplicateurs (3), à la sortie de la mémoire de multiplicateurs (3), se trouve respectivement le multiplicateur ($\Delta\hat{E}$) qui est attribué à la composante dominante ($E_d$) indiquée par l'unité (5) et au vecteur de quantification (q) formé par l'unité de quantification (2).

Fig. 1

Fig. 2

Fig. 3

Fig. 4

Fig. 5

**EP 2 618 119 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0324718 A1
- DE 19830487 A1
- EP 0321402 A1
- EP 0324718 A

**In der Beschreibung aufgeführte Nicht-Patentliteratur**

- **CONNOLLY, C. ; FLEISS, T.** A study of efficiency and accuracy in the transformation from RGB to CIELAB color space. *IEEE Trans. Image Process,* 1997, vol. 6 (7), 1046-1048
- image tech. col. mgmt. - arch., profile format, and data struc. *International Color Consortium (ICC): Spec. ICC.1:2004-10 (profile version 4.2.0.0),* 2004
- **ILIE, A. ; WELCH, G.** Ensuring color consistency across multiple cameras. *Proc. of IEEE Conf. on Comp. Vis.,* 2005, vol. 2, 1268-1275
- CIE Color Differnce Metrics. **KLAUS WITT.** Understanding the CIE System. Wiley-Interscience, 2007, 79-100